# NOUVEAU FASCICULE DE BREVET EUROPEEN

(11) **EP 2 575 565 B2**
(45) Date de publication et mention de la décision concernant l'opposition: **06.12.2017**
(45) Mention de la délivrance du brevet: 14.05.2014
(21) Numéro de dépôt: 11722386.7
(22) Date de dépôt: 23.05.2011
(51) Int. Cl.: A47J 31/36

(54) **SYSTEME DE PRODUCTION DE BOISSONS PAR INFUSION**
SYSTEM ZUR HERSTELLUNG VON GETRÄNKEN DURCH INFUSION
SYSTEM FOR MAKING BEVERAGES BY INFUSION

(30) Priorité: 25.05.2010 FR 1054016
(43) Date de publication de la demande: 10.04.2013
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2011/058392
(87) Numéro de publication internationale: WO 2011/147794

(56) Documents cités:
- EP-A1- 1 854 384
- WO-A1-2005/058111
- WO-A1-2008//142040
- FR-A- 1 319 958

## Description

La présente invention concerne un dispositif de production de boissons par infusion d'un produit sous forme de doses. Une telle machine est décrite dans le document WO 2005058111.

La démocratisation du café expresso a conduit à l'apparition de machines à café expresso domestiques utilisant des portions pré-dosées de café, sous forme de dose contenant l'exacte quantité de café préalablement torréfié et moulu de façon idéale.

Les machines domestiques embarquent un groupe d'infusion dans lequel est positionnée la dose pour permettre son infusion avec de l'eau chaude sous pression.

L'un des avantages d'une machine à café expresso recevant des portions pré-dosées est de limiter pour l'utilisateur final le nombre d'actions à mener pour obtenir un café de très haute qualité. Il est également avantageux pour l'utilisateur final de ne pas avoir à se préoccuper de l'évacuation de la portion pré-dosée après son infusion. Il existe de multiples dispositifs permettant un fonctionnement complètement automatique du groupe d'infusion d'une machine à café expresso, depuis l'insertion jusqu'à l'éjection de la portion de café pré-dosé, mais ils sont réservés à une utilisation professionnelle.

Ces dispositifs se révèlent très complexes, volumineux et fort coûteux et ne peuvent donc pas être intégrés dans des machines à café expresso domestiques.

L'un des systèmes les plus courants est d'avoir recours à une chambre d'infusion réalisée en deux portions, l'une étant fixe et l'autre rendue mobile. L'une des deux portions de chambre comportant l'arrivée d'eau chaude sous pression tandis que l'autre présente un bec par lequel est distribué le café infusé depuis la dose contenue dans la chambre d'infusion. La pression d'infusion étant assurée par une pompe embarquée dans la machine, il est possible d'utiliser la pression hydraulique de cette même pompe pour assurer le déplacement de la demi chambre d'infusion mobile en lui associant un vérin hydraulique afin d'assurer sa fermeture automatique sans effort humain.

Dans le contexte d'un dispositif complètement automatique et si la pression hydraulique d'une pompe vibrante peut assurer la course de fermeture de la chambre d'infusion ainsi que son étanchéité pendant l'infusion à haute pression, il faut néanmoins synchroniser le mouvement de fermeture de la chambre d'infusion avec celui du chargement d'une portion dans la chambre d'infusion avant d'autoriser le fonctionnement de ladite pompe.

La concurrence pour ce type de machines est particulièrement forte ce qui a entraîné une baisse des prix des vente conduisant à une réduction très significatives des marges.

Une réduction du coût de revient de ces machines serait donc particulièrement avantageuse. La présente invention a pour objectif principal de réduire le coût de ce type de machine tout en conservant un fonctionnement automatique et sans pour autant diminuer la fiabilité du fonctionnement.

A cet effet, on prévoit selon l'invention une machine de production de boisson par infusion d'un produit à infuser comme définie dans la revendication 1.

Ainsi, le système d'entraînement entraîne le déplacement des moyens de fermeture, lesquels pilotent automatiquement en retour le système d'entraînement. Le fonctionnement du moteur est asservi par la position du dispositif de fermeture. En combinant de manière judicieuse des organes de la machine et des interrupteurs, l'invention permet par conséquent d'assurer le fonctionnement du dispositif de fermeture de manière automatique et sans avoir recours à de l'électronique à base de logique programmée.

Dans les machines automatiques existantes, la gestion synchronisée des mouvements nécessite le recours à des capteurs de position qui sont gérés par un programme d'instruction contenues dans plusieurs composants électroniques présents sur un circuit imprimé. Or, la présence de plusieurs composants à logique programmée sur une carte électronique a pour conséquence d'en augmenter fortement son coût de fabrication donc son prix d'achat.

L'invention, permet ainsi de réduire le prix de revient des machines automatiques.

En outre, les très bas niveaux de courant et l'organisation complexe du programme, présent dans les composants électroniques à logique programmée des machines automatiques connues, les rendent sensibles aux perturbations électromagnétiques. Or, l'absence de fiabilité d'une machine à café expresso domestique automatique, prévue pour recevoir des doses spécifiques est un frein à la commercialisation de ces machines et de manière plus préjudiciable de ces doses.

Puisqu'elle ne nécessite pas la présence d'une carte électronique, la machine selon l'invention est ainsi moins sensible que les machines connues aux perturbations électromagnétiques et présente par conséquent une fiabilité accrue.

Par ailleurs, la présence dans les circuits électroniques, de composés chimiques complexes et toxiques pour l'environnement, rend les machines existantes difficile à recycler en fin de vie dans le respect des réglementations pour la sauvegarde de l'environnement. Une machine selon l'invention, sans carte électronique présente ainsi un impact environnemental limité.

De manière facultative, le système selon l'invention comprend en outre au moins l'une quelconque des caractéristiques suivantes :
- un bouton BP actionnable par un utilisateur, admettant une première et une deuxième configuration et des interrupteurs de commande associés au bouton BP et agissant sur le circuit électrique d'alimentation du système d'entraînement.
- L'interrupteur AR est agencé pour être connecté en série avec le moteur. lorsque le bouton BP de commande est dans la première configuration.
- l'interrupteur AR est disposé dans le circuit d'alimentation électrique du moteur de sorte que l'ouverture de l'interrupteur AR bloque l'alimentation électrique du moteur, l'interrupteur AR étant ouvert lorsqu'il est sollicité. Il est connecté en série au moteur.
- l'interrupteur AR est configuré pour sélectivement ouvrir ou fermer le circuit d'alimentation du moteur. Ainsi, l'ouverture ou la fermeture de l'interrupteur AR agit directement sur l'alimentation du moteur. L'invention n'a pas recours à une carte électronique de gestion une unité de contrôle pour commander le moteur, la carte électronique étant alimentée en information par un ou des capteurs de position de fin de course. La solution selon l'invention est plus simple et moins onéreuse qu'une solution intégrant des capteurs de fin de course et une électronique de gestion.
- l'interrupteur AR est configuré pour être ouvert lorsqu'il est au contact d'une pièce mobile solidaire en déplacement du dispositif de fermeture et pour être fermé lorsqu'il n'est pas au contact de cette pièce mobile.
- L'interrupteur AV est agencé pour être connecté en série avec le moteur lorsque le bouton de commande est dans la deuxième configuration. L'interrupteur AV est configuré pour sélectivement ouvrir ou fermer le circuit d'alimentation du moteur. Il est configuré pour être ouvert lorsqu'il est au contact d'une pièce mobile solidaire en déplacement du dispositif de fermeture et pour être fermé lorsqu'il n'est pas au contact de cette pièce mobile. Ainsi, l'ouverture ou la fermeture de l'interrupteur AV agit directement sur l'alimentation du moteur, sans recourir à une carte de gestion ou une unité de contrôle.
- l'interrupteur AV est disposé dans le circuit d'alimentation électrique du moteur de sorte que l'ouverture de l'interrupteur AV bloque l'alimentation électrique du moteur, l'interrupteur AV étant ouvert lorsqu'il est sollicité. Il est connecté en série au moteur. La machine est configurée de sorte que dans la première position du dispositif de fermeture l'interrupteur AR est au contact d'une pièce mobile et l'interrupteur AV n'est pas au contact d'une pièce mobile et que dans la deuxième position du dispositif de fermeture l'interrupteur AV est au contact d'une pièce mobile et l'interrupteur AR n'est pas au contact d'une pièce mobile.

Ainsi, une pression sur le bouton de commande provoque le déplacement du dispositif de fermeture depuis la première position à la deuxième position, permettant de ce fait d'introduire une dose en vue d'une infusion. Une seconde pression sur le bouton de commande provoque le déplacement du dispositif de fermeture depuis la deuxième position à la première position, permettant de ce fait de libérer la dose en fin d'infusion et de repositionner le dispositif en vue d'un nouveau cycle d'infusion. Les fins de courses et les inversions de sens de déplacement du moteur sont assurés de manière automatiques. Le déplacement du dispositif de fermeture entre la première position à la deuxième position est automatiquement stoppé en fin de course par l'arrêt du moteur provoqué par la sollicitation des interrupteurs AV et AR. Aucune carte électronique et aucun composant à logique programmé n'est nécessaire.
- les interrupteurs AR et AV coopèrent avec une même pièce mobile.
- les interrupteurs AR et AV sont le contacteur est un interrupteur disposé sur le circuit électrique d'alimentation dudit organe. Ainsi, lorsque le système d'actionnement parvient dans une première position, le circuit d'alimentation de l'organe se ferme et l'organe est alimenté en électivité. Lorsque le système d'actionnement parvient dans une deuxième position, le circuit d'alimentation de l'organe s'ouvre et l'alimentation de l'organe est alors coupée. Par conséquent, la position du dispositif de fermeture permet de commander l'activation de l'organe sans que l'on ait besoin de recourir à une carte électronique de gestion ce qui permet de limiter significativement la complexité et le coût de la machine.

Typiquement, l'organe est un moteur commandant le mouvement du système d'actionnement. De manière alternative ou cumulé, l'organe est pris parmi : une pompe d'alimentation du groupe en eau sous pression, une électrovanne, un vérin, une chaudière.
- la machine comprend un interrupteur CP connecté en série à un circuit d'alimentation de la pompe. L'interrupteur CP est configuré pour sélectivement ouvrir ou fermer le circuit d'alimentation de la pompe. Il est configuré pour fermer le circuit d'alimentation de la pompe lorsqu'il est sollicité. Il autorise ainsi l'alimentation de la pompe lorsqu'il est sollicité. Il est configuré pour bloquer l'alimentation de la pompe lorsqu'il n'est pas sollicité et est configuré pour être sollicité par une pièce mobile solidaire en déplacement avec le dispositif de fermeture lorsque le dispositif de fermeture est dans la deuxième position. Ainsi, l'ouverture ou la fermeture de l'interrupteur CP agit directement sur l'alimentation de la pompe. L'interrupteur CP est connecté en série à la pompe.
- le circuit hydraulique comprend une électrovanne de décharge agencée pour permettre la dépressurisation du fluide contenu dans le circuit hydraulique lorsqu'elle est alimentée en électricité.
- la machine comprend un interrupteur CV connecté en série à un circuit d'alimentation en électricité de l'électrovanne. L'interrupteur CV est configuré pour fermer un circuit d'alimentation de l'électrovanne lorsqu'il est sollicité. Il autorise ainsi l'alimentation de l'électrovanne lorsqu'il est sollicité. Il est également configuré pour ouvrir le circuit d'alimentation lorsqu'il n'est pas sollicité. Il bloque alors l'alimentation de l'électrovanne lorsqu'il n'est pas sollicité. Il est configuré pour être sollicité par une pièce mobile solidaire en déplacement avec le dispositif de fermeture lorsque le dispositif de fermeture est dans la première position. Ainsi, l'ouverture ou la fermeture de l'interrupteur CV agit directement sur l'alimentation de l'électrovanne. L'interrupteur CV est connecté en série à l'électrovanne.

Il est important de noter que les interrupteurs AR, AV, CV, CP en particulier, sont des interrupteurs configurés pour ouvrir ou fermer le circuit de l'organe (moteur, moteur, électrovanne, pompe) qu'ils contrôlent respectivement. Ils sont ainsi bien différents de capteurs de position dont le rôle serait d'envoyer à une unité de contrôle ou à une carte électronique de gestion une information sur la position d'un élément mobile destiné à coopérer avec chacun des capteurs. A ce titre, les interrupteurs AR, AV, CV, CP sont des interrupteurs disposés dans des circuits de puissance et sont configurés pour couper ou alimenter lesdits organes. Ils sont différents de capteurs de position intégrés dans un circuit de commande et configurés pour donner une information de position.
- de préférence, les interrupteurs CV et CP coopèrent avec une même pièce mobile.
- les interrupteurs AV et AR sont sollicités par une première pièce mobile solidaire en déplacement du dispositif de fermeture et dans laquelle les interrupteurs CP et CV sont sollicités par une deuxième pièce mobile solidaire en déplacement du dispositif de fermeture.
- la première pièce mobile est entraînée en translation par une première vis sans fin et la deuxième pièce mobile est entraînée en translation par une deuxième vis sans fin distincte de la première vis sans fin.
- la première vis sans fin est solidaire en rotation du moteur.
- les interrupteurs CP et CV sont positionnés de sorte que le temps entre le blocage de l'alimentation de la pompe et l'alimentation de l'électrovanne permet au moins en partie une dépressurisation du circuit hydraulique par une sortie de la chambre d'infusion.
- la machine est configurée de sorte que le temps entre le blocage de l'alimentation de la pompe et l'alimentation de l'électrovanne est d'environ 0.1 secondes.
- de manière avantageuse, dans la première position, les moyens de fermeture amont empêchent l'entrée de la dose dans la chambre et le dispositif de fermeture autorise la sortie hors de la chambre d'une dose présente dans la chambre.
- avantageusement, les moyens de fermeture amont et les moyens de fermeture aval sont solidaires. La cinématique du système est ainsi simplifiée et le système est rendu plus robuste et fiable. En particulier, les risques de mauvais positionnement des moyens de fermeture amont par rapport aux moyens de fermeture aval sont réduits.
- la chambre d'infusion est définie par deux demi chambres aptes à être mutuellement rapprochées ou éloignées et dans laquelle le dispositif de fermeture est distinct des première et deuxième portions de chambre. De préférence, le dispositif de fermeture constitue une unique pièce portant les moyens de fermeture amont et les moyens de fermeture aval.
- le dispositif de fermeture est configuré pour translater selon une direction principale. Avantageusement, les moyens de fermeture amont et aval sont disposés de manière à présenter un décalage mutuel selon ladite direction principale.
- le dispositif de fermeture comprend un organe de guidage agencé de manière à guider le dispositif de fermeture dans son déplacement alternatif en translation entre la première et la deuxième position. Cette caractéristique permet d'améliorer encore la robustesse et la fiabilité du système.
- une demi chambre est fixe, l'autre est mobile. La demi chambre mobile comporte un conduit d'alimentation en eau de la chambre d'infusion. La cinématique de la machine est ainsi grandement simplifiée, fiable et robuste. En outre, l'actionnement de la chambre ainsi que le dispositif de fermeture sont logés dans un espace réduit.
- Le dispositif de fermeture comprend des moyens de fermeture amont agencés de manière à sélectivement empêcher ou à autoriser l'entrée de la dose dans la chambre. Il comprend également des moyens de fermeture aval agencés de manière à sélectivement empêcher ou à autoriser la sortie de la dose hors de la chambre. De manière particulièrement avantageuse, le dispositif de fermeture est agencé pour passer alternativement: d'une première position dans laquelle les moyens de fermeture amont empêchent l'entrée de la dose dans la chambre et les moyens de fermeture aval autorisent la sortie de la dose hors de la chambre; à une deuxième position dans laquelle : les moyens de fermeture amont autorisent l'entrée de la dose dans la chambre, les moyens de fermeture aval permettent la réception de la dose introduite dans la chambre et empêchent la sortie de cette dernière hors de la chambre.
- le système d'infusion est configuré pour être solidarisé de manière amovible sur un module de la machine comprenant la chaudière et la pompe et comprend un interrupteur CG, l'interrupteur CG étant connecté en série à un circuit d'alimentation de la pompe, étant agencé pour coopérer avec le système d'infusion de sorte que lorsque le système d'infusion est solidarisé sur ledit module de la machine l'interrupteur CG est alors fermé et ne bloque pas l'alimentation de la pompe, et étant agencé de sorte que lorsque le système d'infusion n'est pas solidarisé sur ledit module de la machine l'interrupteur CG est alors ouvert et bloque l'alimentation de la pompe.
- la machine comprend un capot configuré pour être solidarisé de manière amovible sur le système d'infusion et un interrupteur CC, l'interrupteur CC étant connecté en série à un circuit d'alimentation de la pompe, étant agencé pour coopérer avec le capot de sorte que lorsque le capot est solidarisé sur le système d'infusion l'interrupteur CC est alors fermé et ne bloque pas l'alimentation de la pompe, et étant agencé de sorte que lorsque le capot n'est pas solidarisé sur le système d'infusion l'interrupteur CG est alors ouvert et bloque l'alimentation de la pompe.
- le dispositif de fermeture comprend des moyens de fermeture aval configurés pour autoriser la sortie par gravité de la dose hors de la chambre d'infusion lorsque le dispositif de fermeture est dans la première position et configurés pour réceptionner la dose dans la chambre d'infusion et empêcher sa sortie hors de la chambre d'infusion lorsque le dispositif de fermeture est dans la deuxième position.
- la machine comprend une trappe d'accès au système d'infusion et dans laquelle le dispositif de fermeture comprend des moyens d'obstruction configurés pour autoriser le passage de la dose à travers la trappe lorsque le dispositif de fermeture est dans la première position et configurés pour empêcher le passage de la dose à travers la trappe lorsque le dispositif de fermeture est dans la deuxième position.

La présente invention a également pour objet un procédé selon la revendication 15.

D'autres caractéristiques, buts et avantages de la présente invention apparaîtront à la lecture de la description détaillée qui va suivre et au regard des dessins annexés donnés à titre d'exemple non limitatif et sur lesquels :
La figure 1 est une vue en coupe longitudinale d'un système d'infusion selon un exemple de réalisation de l'invention, la chambre d'infusion étant ouverte.
La figure 2 est une vue en perspective et en coupe longitudinale du système illustré en figure 1, la chambre d'infusion étant ouverte.
Les figures 3 et 4 sont des vues en perspective d'un dispositif de fermeture et d'un système d'entraînement selon un exemple de réalisation de l'invention.
La figure 5 est une vue en perspective du système d'entraînement illustré en figure 3 et 4.
Les figures 6 à 21 sont des schémas d'une machine selon un exemple de réalisation de l'invention incorporant notamment le système d'infusion illustré aux figures 1 et 2, le dispositif de fermeture et le système d'entraînement illustrés en figures 3 et 4, ainsi qu'un réservoir, une pompe, une chaudière, une électrovanne de décharge et un circuit d'alimentation électrique de la pompe, de l'électrovanne et du système d'entraînement. Les figures 7 à 19 illustrent les différentes phases d'un cycle d'utilisation de la machine.

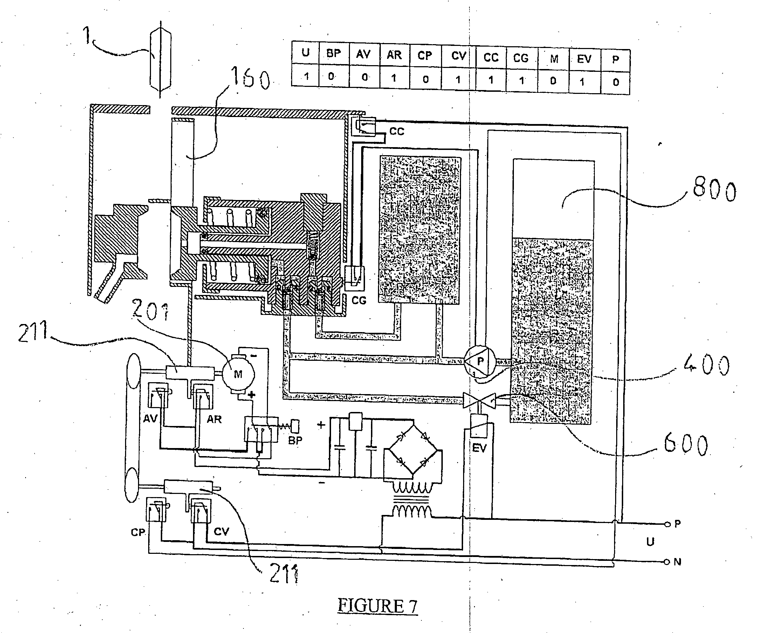

Dans le cadre de la présente invention, on peut utiliser des doses du type présentées sur les figures 7 à 19 et décrits dans le document WOA9507041 bien que cet exemple ne soit pas limitatif. Sur ces figures, le produit infusé, par exemple la mouture de café, est enfermée dans un volume intérieur de la dose constituée par l'assemblage de couches jointes par leurs périphéries au niveau d'un pourtour. Avantageusement, la présente invention est utilisable avec des types variés de doses. Elle n'implique notamment pas que le pourtour de la dose 1 soit rigide. De manière plus générale, l'invention s'applique quel que soit le type de dose. Elle s'applique aux doses présentant une enveloppe extérieure souple ou rigide de type capsule. Elle s'applique également aux doses dont l'enveloppe extérieure est apte à disparaître au moins en partie lors de l'infusion, par dissolution par exemple.

### Chambre d'infusion et actionneur de la chambre d'infusion

Concernant l'actionneur 40 de la chambre d'infusion 7 et la chambre d'infusion 7, on qualifiera d'amont et d'aval les portions d'espace respectivement disposées avant et après un point considéré relativement à l'écoulement d'un flux dans la machine lors d'un cycle de préparation d'une boisson.

Le système 10 d'infusion selon l'invention, également désigné groupe d'infusion comporte une chambre d'infusion 7 destinée à recevoir une dose 1. La chambre d'infusion 7 comprend deux portions de chambres agencées pour être mutuellement éloignées ou rapprochées par un actionneur 40 afin de respectivement fermer ou ouvrir la chambre d'infusion 7.

On désignera par demi chambres des pièces aptes à être disposées en contact mutuel ou au contact d'une dose 1 pour former un volume étanche faisant office de chambre d'infusion 7. L'invention n'implique en aucune manière que les deux portions de chambre présentent mutuellement une quelconque symétrie.

Dans l'exemple de réalisation présenté, l'une des portions de chambre, désignée première portion de chambre 42 ou portion mobile, est entraînée par un actionneur 40 autorisant le rapprochement et l'éloignement mutuels des portions de chambre. De préférence, la première portion de chambre 42 est portée par l'actionneur. L'autre portion de chambre, désignée par la suite deuxième portion de chambre ou portion fixe 22, est solidaire d'un bâti 20 de la machine. Chacune des portions de chambre présente une extrémité définissant un pourtour contenu dans un plan sensiblement perpendiculaire à l'axe longitudinal 11.

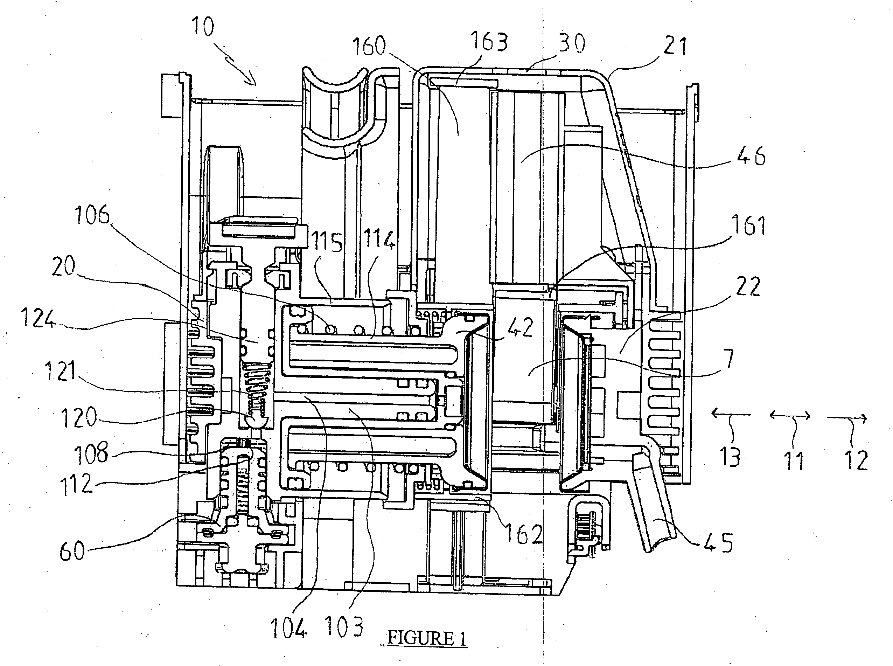

On désignera par la suite axe longitudinale 11 ou direction longitudinale 11 la direction comprenant la direction principale de déplacement de l'actionneur 40. On qualifiera de sens avant 12 le sens, selon cet axe 11 contribuant au rapprochement mutuel des deux portions de chambre et on qualifiera de sens arrière 13, le sens selon cet axe 11 permettant un éloignement mutuel des deux portions de chambre 22, 42. La direction longitudinale 11, le sens avant 12 et le sens arrière 13 sont représentés en figure 1.

Dans le cadre de l'exemple de réalisation représenté, la première portion de chambre 42 présente un conduit d'alimentation 24 connecté à des moyens d'alimentation en fluide à infuser, typiquement de l'eau chaude. De manière conventionnelle, les moyens d'alimentation forment un circuit d'eau chaude comportant un réservoir, une chaudière 500 permettant d'augmenter la température d'une partie de l'eau issue du réservoir jusqu'à une température souhaitée en vue de son infusion dans la chambre d'infusion 7, ainsi qu'une pompe 400 permettant d'élever la pression de l'eau dans le circuit. Lors de l'infusion, les deux portions de chambre 42, 22 sont maintenues fermement au contact l'une de l'autre et délimitent un volume étanche de réception de la dose 1. L'étanchéité peut être réalisée par application des pourtours des deux portions de chambre sur le pourtour de la dose 1 qui fait alors office de joint. L'étanchéité peut également être assurée ou être renforcée des moyens d'étanchéité rapportés.

La deuxième portion de chambre 22 comporte un conduit d'évacuation 45 de boisson en communication fluidique d'une part avec l'intérieur de la chambre d'infusion 7 et avec une sortie de boisson d'autre part. Ce conduit d'évacuation 45 est destiné à assurer l'évacuation de la boisson résultant de l'infusion de la dose 1 vers un contenant tel qu'une tasse à café.

Après infusion, lorsque la première portion de chambre 42 est éloignée de la deuxième portion de chambre 22, la chambre d'infusion 7 est ouverte, la dose 1 déjà infusée n'est alors plus enserrée dans la chambre d'infusion 7. Cette dose 1 est évacuée de la chambre d'infusion 7 par gravité et tombe dans un bac de récupération.

La structure du système d'infusion 1 selon l'invention va maintenant être détaillée.

L'actionneur 40 comprend une chambre de poussée 100 destinée à être alimentée par un fluide sous pression issu de la pompe. Il est configuré pour entraîner la première portion 42 de manière à commander au moins en partie la fermeture de la chambre d'infusion 7 lorsque la chambre de poussée 100 est alimentée par une pression supérieure à une pression donnée.

En outre, les moyens d'alimentation 24, 104, 108, portés au moins en partie par la première portion de chambre 42, sont fluidiquement isolés de la chambre de poussée 100.

Ainsi, le fluide d'alimentation de l'actionneur est isolé du fluide chauffé pour l'infusion. Il en résulte que lors de la phase d'ouverture de la chambre d'infusion 7, l'actionneur ne chasse pas d'eau chauffée. La quantité d'eau chauffée est donc réduite et la consommation énergétique de la machine est amoindrie.

En outre, et de manière particulièrement avantageuse, le système est configuré de sorte que les moyens d'alimentation en fluide de la chambre d'infusion 7 et l'actionneur de la chambre d'infusion 7 sont disposés du même côté de la chambre d'infusion 7. De manière encore plus avantageuse, les moyens d'alimentation et l'actionneur sont disposés en arrière de la chambre d'infusion 7.

Ainsi, aucun organe d'alimentation de la chambre ou d'actionnement ne doit nécessairement être disposé en avant de la deuxième portion 22. La face avant de la deuxième portion 22 est solidaire du bâti. La deuxième portion 22 peut ainsi être positionnée au plus près d'une face avant d'une machine équipée du système selon l'invention. On désigne par face avant une face depuis laquelle l'utilisateur est destiné à interagir avec la machine pour préparer une boisson. Typiquement, la face avant comporte un espace de récupération de la boisson infusée. Cet espace de récupération, non représenté, est par exemple un plan de pose d'une tasse.

La distance entre la chambre d'infusion 7 et la face avant de la machine étant réduite, le conduit d'évacuation 45 peut également être limité. En particulier l'invention permet de se passer d'un long conduit d'évacuation ou d'une goulotte de rallonge habituellement nécessaire à l'amenée de la boisson infusée jusque dans une tasse. Un long conduit d'évacuation ou une goulotte de rallonge est habituellement nécessaire pour que l'utilisateur voie sa tasse sans qu'une partie de la machine ne la masque. Ce positionnement de la tasse suffisamment en avant de la machine est en pratique nécessaire afin de bien positionner la tasse, de contrôler le niveau de remplissage et d'apprécier l'écoulement de la boisson.

Or, au cours du développement de la présente invention, il s'est avéré que la distance séparant la chambre d'infusion de la tasse impacte suffisamment la température du fluide infusé pour modifier la qualité de la boisson obtenue. Notamment il s'est avéré qu'une longue distance a tendance à casser la mousse se formant habituellement à la surface d'un café. En outre, cette distance rend délicat le contrôle de la température de la boisson à son arrivée dans la tasse. Or, la perception gustative d'une boisson infusée, telle que le café dépend largement de la température lors de la dégustation.

En raccourcissant la distance entre la chambre d'infusion et la face avant de la machine, l'invention permet de raccourcir la distance séparant la tasse de la chambre d'infusion 7. Les pertes thermiques lors de l'acheminement de la boisson sont donc réduites, améliorant de ce fait la qualité de la boisson obtenue.

De plus, la longueur du conduit entre la chambre et la tasse augmente les transferts thermiques entre la boisson et la machine. Plus le conduit est froid plus ces transferts thermiques sont élevés. Or, lorsque plusieurs cafés sont effectués dans un intervalle de temps court le conduit chauffe, réduisant de ce fait les transferts thermiques. Les transferts thermiques varient donc fortement en fonction de l'utilisation de la machine ce qui empêche une bonne répétitivité de la qualité de la boisson obtenue. En réduisant la longueur du conduit d'évacuation, l'invention permet donc de réduire les transferts thermiques et contribue par conséquent à améliorer la répétitivité de la qualité de la boisson obtenue sans amoindrir la fiabilité du fonctionnement.

De plus, l'invention limite la quantité d'eau chauffée rejetée quelle que soit la longueur de course de l'actionneur. L'invention autorise ainsi une course suffisamment longue pour assurer tout le déplacement de la portion de chambre 42 mobile. L'invention permet alors de se passer d'un dispositif complémentaire ayant pour fonction d'effectuer une partie du déplacement de la chambre mobile. L'encombrement de la machine est par conséquent réduit.

De préférence, l'actionneur entraînant la première portion de chambre est un vérin 40. Le vérin comprend un piston 114. La première portion 42 de chambre est portée par le piston 114 du vérin 40. Le cylindre 115 du vérin comporte un fond 102 faisant face à la surface de poussée 101 du piston 114. Le fond 102 du vérin 40, ses parois longitudinales et la surface de poussée 101 définissent une chambre de poussée 100. Cette chambre de poussée 100 comporte au moins un orifice reliant la chambre de poussée à une entrée de fluide de poussée 109 portée par le système 10 et destinée à être connectée à la pompe. L'activation de la pompe provoque la mise sous pression de la chambre de poussée 100 ce qui entraîne le déplacement du piston 114 vers l'avant 12 et son éloignement par rapport au fond 102 du cylindre 115.

Le système comprend des moyens de rappel du vérin 40. Ces moyens comprennent un ressort de rappel 106 configuré pour assurer le retour vers l'arrière 13 du piston 114 en position rétractée lorsque la pression baisse dans la chambre de poussée 100. Le ressort 106 travaille en compression et s'étend longitudinalement. De préférence, il est cylindrique est entoure le piston 114. Il prend appui en amont sur le piston et en aval sur une butée 107 solidaire du bâti. Dans un mode de réalisation non représenté cette butée 107 contribue au moins en partie au guidage du piston.

La figure 1 représente le vérin dans sa position rétractée, le ressort de rappel 106 étant déployée et le piston étant en contact avec le fond du cylindre 115. La chambre est alors complètement ouverte. Dans sa position déployée, le ressort de rappel 106 est rétracté au maximum et le piston est repoussé vers l'avant 12 et est éloigné du fond du cylindre 115. La chambre est alors complètement ouverte.

Le cylindre 115 comporte des moyens d'emmanchement 103 formant saillie depuis le fond 102 et s'étendant en direction du piston. Le piston comporte un logement s'étendant depuis la surface de poussée 101. Le logement et les moyens d'emmanchement 103 sont conformés de sorte que les moyens d'emmanchement 103 pénètrent en profondeur dans le logement lors du retour du vérin 40 en position rétractée.

Le piston 114 s'étend ainsi sensiblement longitudinalement. Son extrémité amont est définie par une paroi faisant face au fond du cylindre 115. Cette paroi amont définit en partie la chambre de poussée 100. Elle est ainsi destinée à être poussée vers l'avant par le fluide sous pression. L'extrémité aval du piston 114 est formée par la première portion de chambre 42. Le piston 114 comprend également un corps de piston 114 portant le logement et destiné à loger les moyens d'emmanchement. Ce corps est sensiblement cylindrique et s'étend depuis la paroi amont jusqu'à la première portion de chambre 42. De préférence, le corps du piston 114 comporte une cavité fermée pour en alléger le poids et réduire la quantité de matière.

Quelle que soit la position du piston 114, l'extrémité aval des moyens d'emmanchement 103 est insérée dans le logement du piston 114. Des joints disposés entre les moyens d'emmanchement 103 et piston 114 assurent en permanence l'étanchéité du passage 105. De préférence, ces joints sont montés sur les moyens d'emmanchement, à proximité de l'extrémité aval de ces derniers.

Les moyens d'emmanchement 103 comportent un canal d'alimentation 104 intérieur. Une extrémité amont du canal 104 est fluidiquement reliée à une entrée de fluide 108 connectée à la chaudière. Une extrémité aval débouche dans un passage 105 formé par le logement de la partie mobile de l'actionneur. Ce passage 105 débouche en aval dans le conduit d'alimentation 24 porté par la première portion de chambre 42 et alimentant la chambre d'infusion 7.

Ainsi, lors du déploiement du vérin 40, le piston 114 s'éloigne du fond 102 du cylindre 115 et le passage 105 s'agrandit. Inversement, lors de la rétractation du vérin 40, le passage 105 se raccourcit. Le passage 105 dans sa dimension minimale est représenté en figure 1.Quelle que soit la position du piston 114, la chambre d'infusion 7 est toujours en communication fluidique avec le canal d'alimentation 104.

Avantageusement ces moyens d'emmanchement 103 participent au guidage du piston 114.

De manière préférée, le guidage du piston 114 est également assuré par une coopération entre les parois longitudinales du cylindre 115 et le piston 114.

Au moins un joint est disposé entre la paroi longitudinale du cylindre 115 et le pourtour périphérique de la paroi du piston 114 disposée au regard du fond du cylindre 115. Ce joint permet d'assurer l'étanchéité de la chambre de poussée 100 et contribue au moins en partie au guidage du piston 114.

De préférence, les moyens d'emmanchement 103 définissent un arbre et le logement du piston 114 est un alésage. De préférence, l'arbre passe par le centre du cylindre 115 et l'alésage est situé au centre du piston 114.

Ainsi, le système est agencé de sorte que le fluide issu de l'entrée de fluide à infuser 108 est séparé du fluide issu de l'entrée de fluide de poussée 109. Ces deux fluides peuvent donc être alimentés séparément, par exemple par deux branches 703, 705 différentes du circuit hydraulique, permettant de ce fait de ne pas approvisionner en eau chaude la chambre de poussée 100. Le rendement énergétique de la machine est ainsi amélioré.

### Dispositif de fermeture

Concernant le dispositif de fermeture, on qualifiera d'amont et d'aval les portions d'espace respectivement disposées avant et après un point considéré relativement au trajet normal d'une dose 1 dans la machine lors d'un cycle de préparation d'une boisson.

Le système 10 comporte un dispositif de fermeture 160. Ce dispositif de fermeture 160 comporte des moyens de fermeture aval 162 ainsi que des moyens de fermeture amont 161. Les moyens de fermeture amont sont disposés en amont de la chambre d'infusion 7 relativement au trajet d'une dose au cours d'un cycle d'utilisation. Les moyens de fermeture aval sont disposés en aval de la chambre d'infusion 7 relativement au trajet d'une dose au cours d'un cycle d'utilisation. Le système 10 est distinct de chacune des portions de chambre 22, 42 formant la chambre d'infusion 7 d'infusion.

### Moyens de fermeture aval

Les moyens de fermeture aval 162 sont agencés de manière à faire office de butée d'arrêt escamotable pour une dose 1 introduite dans la chambre d'infusion 7.

Dans une position non escamotée les moyens de fermeture aval 162 assurent la réception d'une dose 1 introduite dans la chambre d'infusion 7 alors que celle-ci est ouverte, et empêchent l'éjection par gravité de cette dose 1 par la sortie de la chambre d'infusion 7. On qualifiera d'entrée et de sortie les ouvertures de la chambre d'infusion 7 par lesquelles une dose respectivement entre et sort de la chambre d'infusion 7 dans le cadre d'une utilisation normale de la machine.

Dans cette position les moyens de fermeture aval 162 interdisent également toute intrusion dans la chambre d'infusion 7 depuis la sortie de cette dernière. Ainsi l'utilisateur ne peut pas, par exemple, introduire ses doigts dans la chambre d'infusion 7.

Dans une position escamotée, les moyens de fermeture aval 162 ne forment pas une butée d'arrêt pour une dose 1 introduite dans la chambre d'infusion 7 et permettent donc l'évacuation d'une dose 1 lors de l'ouverture de la chambre d'infusion 7.

### Moyens de fermeture amont

Les moyens de fermeture amont 161 sont agencés de manière à faire office de butée d'arrêt escamotable. Ils sont disposés en amont de la chambre d'infusion 7 d'infusion.

Dans une position non escamotée les moyens de fermeture amont 161 empêchent l'accès d'une dose 1 ou de tout autre élément dans la chambre d'infusion 7 d'infusion depuis l'amont de cette dernière. Dans cette position non escamotée les moyens de fermeture amont 161 assurent également la réception et participent au maintien en position d'une dose 1 introduite dans le système 10.

En position escamotée les moyens de fermeture amont 161 autorisent l'introduction d'une dose 1 dans la chambre d'infusion 7 depuis l'amont de cette dernière.

Le système 10 est agencé de manière à faire passer le dispositif de fermeture 160 alternativement d'une première position dans laquelle les moyens de fermeture amont 161 empêchent l'entrée d'une dose 1 dans la chambre d'infusion 7, et les moyens de fermeture aval 162 assurent qu'aucune dose 1 usagée ne demeure présent dans la chambre d'infusion 7, à une deuxième position dans laquelle les moyens de fermeture amont 161 autorisent l'entrée d'une dose 1 dans la chambre d'infusion 7 et les moyens de fermeture aval 162 permettent la réception et le maintien d'une dose 1 dans la chambre d'infusion 7.

Le dispositif de fermeture 160 est agencé de manière à ce que la position des moyens de fermeture amont 161 conditionne la position des moyens de fermeture aval 162, et à ce que la position des moyens de fermeture aval 162 conditionne la position des moyens de fermeture amont 161.

Ainsi, pour une position donnée des moyens de fermeture amont 161, les moyens de fermeture aval 162 n'admettent qu'une seule position et inversement. Le système présente donc un fonctionnement séquentiel.

Ainsi, l'invention permet de réduire significativement les risques de blocage du système notamment dus au coincement de la dose entre des organes mécaniques. Le nombre d'interventions que doit effectuer un utilisateur ou un réparateur est par conséquent réduit. Elle contribue également à préserver l'intégrité de la dose 1. Par ailleurs, elle empêche qu'une dose introduite dans la machine ne tombe directement dans le bac de récupération sans avoir été au préalable réceptionné au niveau de la chambre de fusion.

Les moyens de fermeture amont 161 et les moyens de fermeture aval 162 sont solidaires. Cette caractéristique contribue à simplifier la cinématique, à améliorer la robustesse et à limiter le coût de revient et le taux de défectuosité du système 10. Le dispositif de fermeture 160 formant une seule pièce définit ainsi une bague.

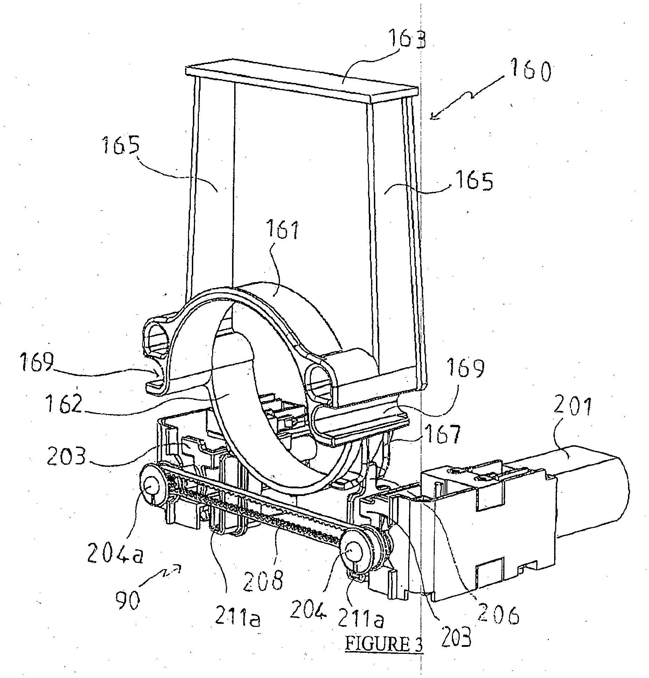

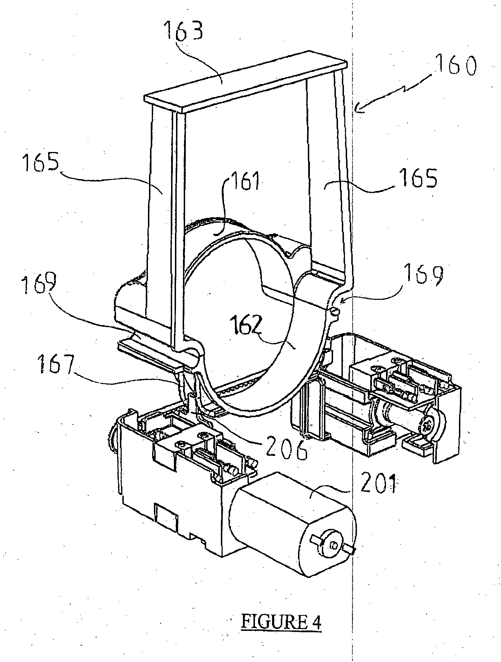

Les figures 3 et 4 laisse apparaître en détail le dispositif de fermeture 160 selon cet exemple de réalisation. Ce dispositif de fermeture 160 comprend :
- un organe de guidage agencé de manière à guider le dispositif de fermeture 160 dans son déplacement alternatif entre la première et la deuxième position. De préférence, l'organe de guidage comprend deux coulisseaux 169 aptes à assurer le guidage en translation du dispositif de fermeture 160 le long de deux arbres portés par le bâti 20 du système 10 et s'étendant selon deux axes de guidage parallèles à l'axe longitudinal 11,
- deux bras 165, 165 s'étendant chacun depuis un coulisseau 169 respectif et dans une direction sensiblement perpendiculaire à l'axe de guidage,
- des moyens de fermeture amont 161 agencés de manière à faire office de butée d'arrêt pour une dose 1 en amont de la chambre d'infusion 7 lorsque le dispositif de fermeture 160 est disposé dans la première position. De manière avantageuse, les moyens de fermeture amont 161 présentent une forme de portion de couronne dont chacune des extrémités joint l'un des bras 165, 165 et qui est centrée sur un axe parallèle aux axes de guidage,
- des moyens de fermeture aval 162 agencés de manière à faire office de butée d'arrêt pour une dose 1 en aval de la chambre d'infusion 7 lorsque le dispositif de fermeture 160 est disposé dans la deuxième position. De manière avantageuse, les moyens de fermeture aval 162 présentent une forme de portion de couronne dont chacune des extrémités joint l'un des deux bras 165, 165 et qui est centré sur un axe parallèle aux axes de guidage.

Par ailleurs, les moyens de fermeture amont 161 et aval 162 sont disposés de manière à présenter un décalage mutuel selon la direction principale de déplacement du dispositif de fermeture 160. Ainsi, dans la deuxième position les moyens de fermeture amont 161 sont disposés sensiblement en avant de la deuxième portion de chambre 22 et les moyens de fermeture aval 162 sont disposés sensiblement en arrière de la deuxième portion de chambre 22. Dans la première position les moyens de fermeture amont 161 et les moyens de fermeture aval 162 sont disposés sensiblement en arrière de la deuxième portion de chambre 22.

Les dimensions de ce décalage sont choisies de manière à ce que :
- lorsque le dispositif de fermeture 160 est disposé dans la première position, les moyens de fermeture amont 161 empêchent l'entrée d'une dose 1 dans la chambre d'infusion 7, et les moyens de fermeture aval 162 autorisent la sortie d'une dose 1 usagée hors de la chambre d'infusion 7,
- lorsque le dispositif de fermeture 160 est disposé dans la deuxième position les moyens de fermeture amont 161 autorisent l'entrée d'une dose 1 dans la chambre d'infusion 7, les moyens de fermeture aval 162 permettent la réception et le maintien d'une dose 1 introduite dans la chambre d'infusion 7.

Ainsi dans cet exemple le dispositif de fermeture 160 étant monté coulissant sur l'axe longitudinal 11, les moyens de fermeture amont 161 et aval 162 présentent un décalage mutuel selon l'axe longitudinal 11. Les moyens de fermeture amont 161 sont disposés en avant des moyens de fermeture aval 162 selon ce même axe.

### Moyens de guidage

Le système 10 comporte également des moyens de guidage 46. Ces moyens de guidage 46 présentent sensiblement la forme d'un manchon complémentaire de la forme de la section de la dose 1. Ils sont configurés pour empêcher tout mouvement significatif de la dose 1 dans un plan horizontal, et à autoriser son déplacement vertical. Ils font office trémie. Ces moyens de guidage 46 sont solidaires du bâti 20. Ils sont donc fixes. De préférence, ils sont montés sur la deuxième portion 22 ou sur une pièce solidaire de cette dernière ou du bâti 20. Ils sont agencés de manière à assurer le guidage de la dose 1 en amont des moyens de fermeture amont 161. Par ailleurs, ils sont longitudinalement disposés de manière à être disposés au droit de l'ouverture de la chambre d'infusion 7 dans la deuxième position afin d'autoriser l'introduction d'une dose 1 dans cette dernière lorsque les moyens de fermeture amont 161 sont escamotés. Plus précisément, ils sont positionnés au droit des moyens de fermeture aval 162 lorsque ces derniers sont dans la deuxième position. Ils guident ainsi la descente de la dose 1 jusque dans la chambre d'infusion 7.

Par ailleurs, ils sont verticalement disposés de manière à être suffisamment proches des moyens de fermeture amont 161 pour assurer le maintien de la dose 1 lorsque cette dernière repose sur les moyens de fermeture amont 161. Ainsi, lorsqu'une dose 1 repose sur les moyens de fermeture amont 161 et que ces derniers translatent vers l'avant, les moyens de guidage 46 contribuent à empêcher toute translation longitudinale significative de la dose 1. Cette dernière est donc maintenue au regard de l'ouverture de la chambre d'infusion 7 lorsque les moyens de fermeture amont 161 sont totalement escamotés. Le mouvement relatif du dispositif de fermeture 160 et des moyens de guidage 46 permet ainsi le transfert de la dose 1 depuis les moyens de fermeture amont 161 à la chambre d'infusion 7. Par ailleurs, ce mouvement relatif permet de protéger l'intégrité de la dose 1 lors de ce transfert.

En prévoyant des moyens de guidage 46 fixes, l'invention contribue à renforcer la robustesse et la fiabilité du système tout en maintenant la caractère séquentiel du fonctionnement.

En outre, ces moyens de guidage 46 permettent de maintenir en position une dose 1 reposant sur les moyens de fermeture amont 161 de manière à faciliter la mise en place de cette dose 1 dans la chambre d'infusion 7. Optionnellement, les moyens de guidage 46 présentent deux rainures sensiblement parallèles et verticales, destinées à coopérer avec le pourtour de la dose 1 afin d'améliorer le guidage de cette dernière.

### Trappe

Le système 10 comprend également une trappe 30 définissant une ouverture disposée en amont des moyens de fermeture amont 161 et en amont des moyens de guidage 46. L'ouverture de la trappe 30 est disposée longitudinalement de manière à être située au droit des moyens de guidage 46. Ils sont ainsi positionnés au droit des moyens de fermeture amont 161 lorsque le dispositif de fermeture 160 est disposé dans la première position. L'ouverture définit par la trappe 30 est accessible par un utilisateur et est destinée à recevoir une dose 1 pour son introduction dans le système 10.

Les moyens de guidage 46 étant fixes par rapport à la trappe 30, l'invention supprime tout risque de coincement d'une dose ou de tout autre objet tel qu'un doigt entre les moyens de guidage 46 et la trappe 30.

### Moyens d'obstruction

Le dispositif de fermeture 160 comporte des moyens d'obstruction 163 agencés de manière à :
- obstruer l'ouverture de la trappe 30 lorsque le dispositif de fermeture 160 est disposé dans la deuxième position,
- laisser libre l'ouverture de la trappe 30 lorsque le dispositif de fermeture 160 est disposé dans la première position.

Les moyens d'obstruction 163 comprennent une butée supérieure disposée en amont des moyens de fermeture amont 161, en amont des moyens de guidage 46 et en aval de l'ouverture de la trappe 30. La butée supérieure s'étend d'un bras 165 à l'autre du dispositif de fermeture 160 et fait office de butée d'arrêt escamotable pour une dose 1. Elle est disposée, selon l'axe longitudinal 11, sensiblement au droit des moyens de fermeture aval 162.

Ainsi, lorsque le dispositif de fermeture 160 est disposé dans la première position, la dose 1 introduite dans l'ouverture de la trappe 30 accède librement aux moyens de guidage 46 et arrive en butée sur les moyens de fermeture amont 161.

Lorsque le dispositif de fermeture 160 est disposé dans la deuxième position, l'introduction d'une dose 1 dans l'ouverture de la trappe 30 est stoppée en amont des moyens de guidage 46 par les moyens d'obstruction 163. Cette dose 1 n'accède donc ni aux moyens de fermeture amont 161 ni aux moyens de fermeture aval 162, ni à la chambre d'infusion 7.

Les moyens d'obstruction 163 empêchent ainsi qu'une dose 1 ne soit introduite alors qu'un autre conditionnement 1 est déjà présent sur les moyens de fermeture amont 161 ou dans la chambre d'infusion 7.

Par ailleurs, lorsque le dispositif de fermeture 160 est dans la deuxième position, les moyens d'obstruction 163 empêchent tout accès au système 10 d'infusion ce qui permet d'améliorer la sécurité de l'ensemble de la machine. En effet, dans cette position un utilisateur ne peut notamment introduire un objet ou ses doigts à l'intérieur du système 10.

Avantageusement, le dispositif de fermeture 160 est formé d'une pièce unique venue de matière. Le dispositif de fermeture 160 pourra par exemple être constitué en aluminium, en acier inoxydable ou encore en plastique.

### Moyens d'entraînement du dispositif de fermeture

Selon la présente invention, il est prévu un système 90 d'entraînement dédié au moins en partie à l'actionnement du dispositif 160 de fermeture. Ce système 90 d'entraînement peut être disposé à proximité du dispositif 160 de fermeture, avantageusement vers sa partie inférieure et notamment en dessous de cette partie inférieure pour laquelle il n'y a pas de risque d'interaction du système 90 avec les moyens de fermeture amont 161 ou aval 162 ou avec une dose. Ce système 90 d'entraînement est amovible du dispositif 160 de fermeture.

Ce système 90 d'entraînement est, par exemple mais pas exclusivement, un système actionné par un moyen d'entraînement tel qu'un moteur 201.

Selon la présente invention, l'action du système 90 d'entraînement est symétriquement répartie par rapport au plan médian du dispositif 160 s'étendant selon la direction de déplacement du dispositif. Ceci permet d'exercer une force de même orientation et de même valeur sur les deux coulisseaux 169 coulissant sur les arbres portés par la machine et donc de maintenir le plan transversal médian du dispositif 160 de fermeture perpendiculaire aux axes de guidage traversant les coulisseaux 169 pendant le déplacement du dispositif 160.

Comme illustré en figures 3 à 5, cet actionnement se fait à l'aide d'un moyen d'entraînement sous la forme d'un moteur 201, ce moyen coopérant avec une vis, préférentiellement une vis sans fin 2. L'axe de la vis sans fin 202 s'étend sensiblement parallèlement aux axes de guidage du dispositif 160 de fermeture sur les coulisseaux 169 respectifs.

Le moyen d'entraînement 201 et la vis sans fin 202 sont placés sous le dispositif 160 de fermeture. Il existe en effet en dessous du dispositif 160 de fermeture un espace laissé vide qui peut accueillir avantageusement ce système 90.

Avantageusement, il y a une vis sans fin 202 ou 202a le long de chaque côté latéral s'étendant dans le sens de déplacement du dispositif 160 de fermeture. Avantageusement, une seule vis 202 est associée directement avec le moyen d'entraînement 201.

En effet, pour un gain de place et pour limiter les coûts du système on peut prévoir un unique moyen d'entraînement 201. Dans ce cas, la vis 202a qui n'est pas associée au moyen d'entraînement 201 présente un moyen de transmission 208 , telle qu'une chaîne ou une courroie, la reliant avec la vis 202 entraînée directement par le moyen d'entraînement 201. Le positionnement de la courroie 208 se fait avantageusement sur l'extrémité libre des vis sans fin 202 et 202a, par l'intermédiaire d'un pignon respectivement menant 204 ou mené 204a. Cette courroie 208 relie avantageusement les deux vis 202 et 202a dans une zone située en dehors du passage de la dose qui s'effectue sous la tête d'infusion fixe, non représentée aux figures.

Comme montré aux figures 3 à 5, quand il n'y a qu'un moyen d'entraînement 201, celui-ci peut être placé sur n'importe quel côté latéral du dispositif 160 de fermeture traversé par un coulisseau 169.

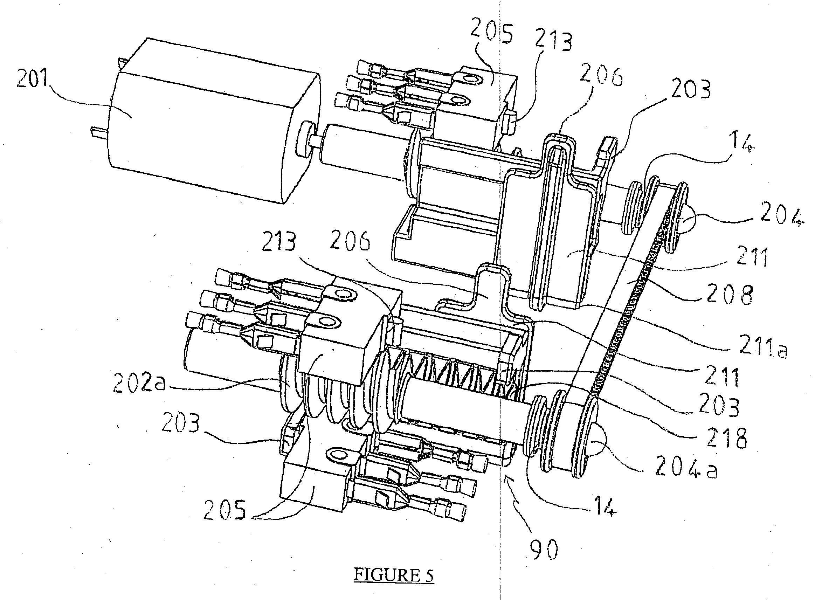

Dans l'ensemble formé par le moyen d'entraînement 201 et la vis sans fin 202 précédemment décrit, on peut prévoir un palier 210 à la sortie du moyen d'entraînement 201 entre ledit moyen 201 et la vis sans fin 202 entraînée de même qu'un palier 214 entre une vis sans fin 202 ou 202a et son pignon respectif 204 ou 204a. Ceci est montré notamment en figure 5 .

Ainsi, l'espace inférieur présent de part et d'autre sous le dispositif 160 de fermeture est exploité de même que le système 90 d'entraînement exerce une action symétrique de chaque coté du dispositif 160 de fermeture portant respectivement un coulisseau 169. L'encombrement de l'ensemble et les risques de coincement sont donc limités.

Le système 90 d'entraînement est relié au dispositif 160 de fermeture par au moins un doigt d'entraînement 206, élément mobile du système 90 par action de la vis sans fin 202 et qui coopère avec une portion de la partie inférieure du dispositif 160 de fermeture afin de lui communiquer le mouvement de déplacement. Dans les modes de réalisation préférentielle de l'invention, le système 90 d'entraînement comprend deux vis sans fin 202 et 202a dont l'une 202 ou 202a est entraînée directement par le moyen d'entraînement 201, un doigt d'entraînement 206 étant prévu pour chaque vis 202 ou 202a.

Chaque doigt d'entraînement 206 s'insère entre deux portions 167 faisant saillie du dispositif 160 et portées par sa partie inférieure en vis à vis du doigt d'entraînement 206. Ceci est particulièrement bien visible aux figures 3 et 4. Ces portions 167 faisant saillie du dispositif 160 sont aménagées sur le moyen de fermeture se trouvant en position la plus basse sur le dispositif 160 de fermeture quand le système d'entraînement est logé sous le dispositif 160.

En se référant notamment à la figure 5, le système 90 d'entraînement comprend, avantageusement, au moins un contacteur de fin de course 213 disposé sur une partie fixe du système 90 coopérant avec une butée mobile 203 portée par une partie mobile du système 90. A ces figures, le système 90 d'entraînement comprend une butée mobile 203 associée avec un contacteur de fin de course 213 pour chacune des première et deuxième positions de déplacement correspondant à la fermeture respective des moyens de fermeture amont 161 et aval 162.

Avantageusement, le contacteur 213 de fin de course fait office de capteur de fin de course. Il est associé à un micro-interrupteur 205 autorisant l'activation ou commandant la désactivation du moteur d'entraînement 201 du dispositif de fermeture 160.

Avantageusement, le système 90 d'entraînement comprend une pièce mobile 211 entraînée par sa vis sans fin associée 202 ou 202a, cette pièce 211 portant le doigt d'entraînement 206 et/ou au moins une butée mobile 203 pour la détermination de la fin de course d'une des première et deuxième positions.

Cette pièce mobile 211 est visible notamment en figure 5. Avantageusement, la pièce mobile 211 comprend de préférence une surface 218 présentant un filetage complémentaire de la vis sans fin 202 ou 202a associée, cette surface 218 étant en vis à vis de ladite vis 202 ou 202a. Avantageusement, la pièce mobile 211, en plus du doigt d'entraînement 206, porte deux butées 203 ou doigts de contact coopérant respectivement avec le contacteur de fin de course 213 correspondant à la première ou à la deuxième position. La pièce mobile 211 présente aussi, à sa partie inférieure, un coude 211 a pour faciliter son déplacement et son montage, ce coude 211 a étant visible notamment à la figure 3. Le coude 211a enserre en effet une paroi du réceptacle empêchant ainsi un débattement transversal important entre la pièce mobile 211 et le réceptacle.

Pour la mise en opération d'éléments auxiliaires, l'ensemble présente des micro-interrupteurs 205 lié au bâti de la machine et comprenant chacun au moins un contacteur 213 pour la commande d'éléments auxiliaires associés indirectement au dispositif 160 de fermeture. On prévoit notamment que lorsqu'une butée mobile 203 parvient au contact d'un contacteur 213, le micro-interrupteurs 205 autorise l'activation ou la désactivation d'un organe tel qu'une pompe de circulation d'un fluide ou tel que l'ouverture d'une électrovanne de décharge. Ces fonctionnalités seront détaillées par la suite.

Avec un tel système d'entraînement, le déplacement du dispositif 160 de fermeture s'effectue de façon identique sur ses cotés latéraux par l'intermédiaire d'une vis sans fin 202 ou 202a entraînant un doigt d'entraînement 206 en contact avec le dispositif 160. Les coulisseaux 169 du dispositif 160 de fermeture avancent symétriquement sur leur arbre respectif passant en leur intérieur et ne peuvent se bloquer.

L'invention améliore ainsi la fiabilité du déplacement du dispositif de fermeture 160 et asservit de manière simple le fonctionnement du moteur d'entraînement 201 du dispositif et/ou le fonctionnement d'autres organes de la machine en fonction de la position de ce dispositif de fermeture 160. Ainsi, l'invention empêche par exemple que la pompe soit enclenchée alors que l'ensemble du dispositif est dans une disposition non adéquate. On réduit ainsi les risques de fuite d'eau chaude, de brûlures par eau chaude, les risques de coincement d'un doigt dans la chambre etc.

### Clapet taré

De manière avantageuse, le système comporte un clapet taré 120 disposé entre l'entrée 108 de fluide à infuser et le canal d'alimentation 104 pratiqué dans l'arbre du cylindre 115.

Le clapet taré 120 est configuré de sorte à empêcher le passage du fluide depuis l'amont vers l'aval lorsque la pression du fluide d'infusion est inférieure à un seuil de pression prédéterminé. Le seuil correspond typiquement à la pression recherchée pour une infusion optimale du produit à infuser. Le fonctionnement de la machine est ainsi contrôlé précisément ce qui permet d'améliorer le processus d'infusion.

En outre, ce clapet est agencé de sorte à empêcher le retour du fluide depuis le canal d'alimentation 104 et la chambre d'infusion 7 vers l'entrée 108 de fluide à infuser.

Selon le mode de réalisation illustré, le clapet taré, lorsqu'il empêche le passage du fluide, est en appui sur un orifice d'entrée formant siège de butée. Le fluide à infuser passe nécessairement par cet orifice d'entrée vers la chambre d'infusion 7. Le clapet taré 120 coopère avec un ressort taré et disposé de sorte à repousser le clapet taré 120 contre le siège de l'orifice d'entrée. Ainsi, le clapet taré 120 est soumis à deux forces opposées lorsqu'un fluide sous pression parvient à l'entrée 108 de fluide à infuser. Une première force correspond à la poussée exercée par ce fluide. Une deuxième force correspond à la poussée du ressort taré 121. Cette deuxième force est constante. Tant que la pression du fluide n'a pas atteint le seuil, la force du ressort taré 121 est supérieure à la force de poussée du fluide et ce dernier est bloqué par le clapet 120. Lorsque la pression atteint le seuil, la force de poussée du fluide surpasse celle du ressort taré 121 entraînant l'éloignement du clapet taré 120 par rapport à l'orifice d'entrée formant siège. Le fluide peut alors s'écouler vers l'aval jusqu'à la chambre d'infusion 7.

De préférence, le système 10 comprend un alésage à l'intérieur duquel un bouchon 124 portant le ressort taré 121 et le clapet taré 120 est introduit. De préférence, l'alésage est vertical et le clapet taré 120 se déplace verticalement. Le bouchon 124 est muni d'un joint assurant l'étanchéité de l'alésage.

De manière particulièrement avantageuse, le système d'infusion 10 est agencé de sorte que le clapet taré 120 s'ouvre lorsque la chambre d'infusion 7 est parfaitement fermée. On prévoit à cet effet que le ressort taré 121 permet le passage du fluide à infuser uniquement lorsque la pression dans la chambre de poussée 100 a permis la fermeture de la première portion 42 sur la deuxième portion 22 ainsi que l'application d'un effort sur la partie mobile de l'actionneur suffisamment important pour assurer l'étanchéité de la chambre d'infusion 7 lors de l'infusion.

### Moyens de connexion fluidique du groupe d'infusion

De manière avantageuse, le groupe d'infusion 10 selon l'invention, également désigné groupe, est également configuré pour être monté de manière amovible sur le reste de la machine. Le reste de la machine, désigné module, comprend tout au moins la pompe et la chaudière.

La machine est agencée de sorte que la solidarisation mécanique du système d'infusion sur le module de la machine provoque la connexion fluidique du système d'infusion 10 avec ce module. Inversement, la désolidarisation mécanique du système d'infusion 10 sur le module supprime la connexion fluidique du système d'infusion 10 avec le module.

Plus précisément, la machine est agencée de sorte qu'un mouvement de translation, de préférence vertical, permette la solidarisation du système sur le module. Le mouvement de translation vertical entraîne la coopération de l'entrée 108 de fluide à infuser et de l'entrée de fluide de poussée 109 avec une branche respective 705, 703 du circuit hydraulique porté par le module de la machine.

Le module comprend un réceptacle, non représenté, apte à loger au moins en partie le système d'infusion 10. Le réceptacle et le système d'infusion 10 comprennent des organes complémentaires conformés pour permettre leur solidarisation amovible. Le réceptacle comprend en outre une tétine 60, 60 pour chacune des entrées 108 et 109. De préférence, chaque tétine 60 présente un corps 65 conformé pour se loger en partie au moins dans l'entrée 108 ou l'entrée 109 correspondante. Chaque tétine est munie de joints, de préférence toriques pour assurer une liaison étanche entre le système d'infusion 10 et le circuit hydraulique du module.

Avantageusement, les tétines des entrées 108 et 109 sont liées entre elles et forment par exemple un ensemble monobloc venu de matière.

Le système d'infusion 10 et les tétines 60 sont conformés de sorte que la solidarisation du système d'infusion 10 sur le réceptacle entraîne l'insertion de chaque tétine dans l'entrée 108, 109 qui lui est associée.

Le corps 65 de la tétine 60 comprend un alésage de passage du fluide dont l'extrémité amont est en communication fluidique avec une branche du circuit hydraulique du module et dont l'extrémité aval forme un orifice 163 débouchant dans l'entrée 108 ou 109.

De manière avantageuse, l'alésage de la tétine comprend un clapet anti-retour 61 associé à un ressort 62 configuré pour que le ressort 62 plaque le clapet anti-retour 61 sur l'orifice 63 de sorte à obstruer l'alésage. Le clapet anti-retour 61 empêche donc le passage du fluide. L'entrée 108 ou 109 de fluide est munie d'un doigt 112 conformé pour coopérer avec le clapet anti-retour 61 lorsque la tétine 60 est logée dans l'entrée 108, 109 de sorte à éloigner le clapet anti-retour 61 par rapport à l'orifice 63 de l'alésage de la tétine 60. Lors de l'insertion du système d'infusion 10 sur le module, le doigt 112 pénètre dans l'orifice 63 de l'alésage, puis entre au contact du clapet anti-retour 61, puis repousse ce dernier pour libérer l'orifice 63. Le fluide peut ainsi s'écouler à travers l'orifice 63 et la communication fluidique est établie entre le module de la machine et le système d'infusion 10.

La machine selon l'invention est conformée de sorte que lors de la désolidarisation du système d'infusion 10 par rapport au module, le doigt 112 s'écarte du clapet anti-retour 61 permettant au ressort 62 de plaquer à nouveau le clapet anti-retour 61 contre l'orifice 63. Ce dernier est alors de nouveau obstrué et empêche l'écoulement du fluide hors du module de la machine.

L'invention permet ainsi d'extraire le système d'infusion 10 par rapport au module de la machine sans provoquer l'écoulement de l'eau présente dans le circuit hydraulique de cette dernière. Cette caractéristique de l'invention est particulièrement avantageuse en cas de transport du module ou en cas de démarrage, même improbable, de la pompe alors que le système d'infusion 10 est extrait.

En outre, le clapet anti-retour 61 empêche la mise à l'air libre du circuit hydraulique de la machine, ce qui évite sa contamination lorsque le système d'infusion 10 est démonté.

L'invention permet ainsi de faciliter l'extraction du système d'infusion 10 en vue de son nettoyage ou de sa réparation par exemple.

### Machine

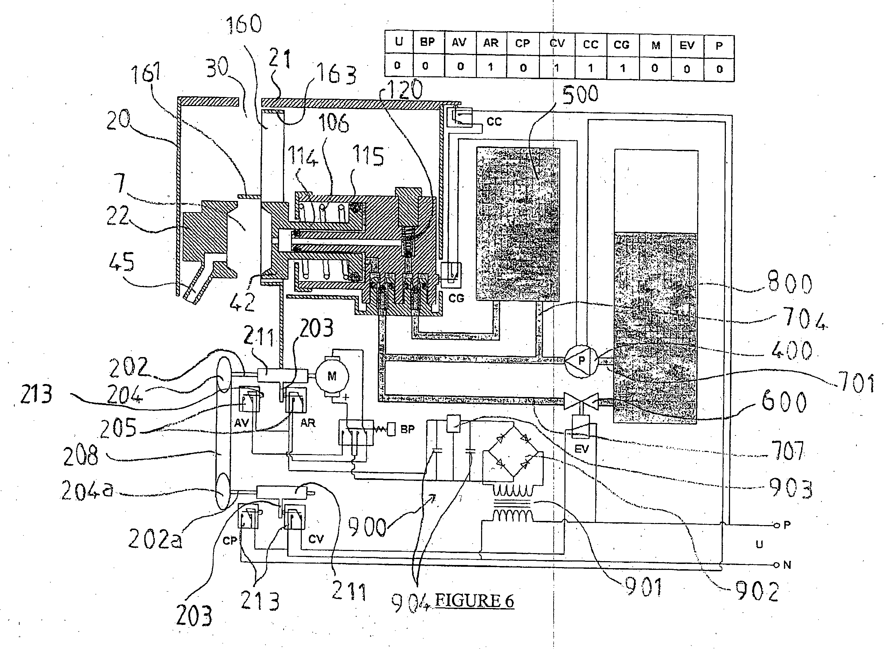

L'invention va maintenant être décrite au regard des figures 6 à 21 illustrant l'ensemble des organes de la machines ainsi que les phases principales de son fonctionnement.

Comme illustré en figure 6, la machine comprend un réservoir 800, un conduit de sortie 701 du réservoir 800. Ce conduit de sortie 701 est équipé de la pompe 400. La pompe 400 est par exemple une pompe vibrante. En aval de la pompe 400, un embranchement 702 donne naissance à deux branches 703, 704.

La branche 703 relie la pompe 400 à des moyens de connexion entre le module et le système d'infusion 10. Ces moyens de connexion sont, dans le cadre du mode de réalisation précédemment décrit, une tétine 60 destinée à coopérer avec l'entrée du fluide de poussée 109. L'embranchement 702 relie quant à lui la pompe 400 à la chaudière 500. Cette dernière est ainsi alimentée en fluide sous pression. La sortie de la chaudière 500 est connectée à une branche 705. Cette branche 705 relie la chaudière 500 à des moyens de connexion entre le module et le système d'infusion 10. Ces moyens de connexion sont, dans le cadre du mode de réalisation décrit précédemment, une tétine 60 destinée à coopérer avec l'entrée du fluide chauffé 108.

Un embranchement 706 est prévu sur la branche 703 reliant la pompe 400 à l'entrée du fluide de poussée 109. Une branche 707 relie cet embranchement 706 au réservoir 800. Une électrovanne de décharge 600 est disposée sur la branche 707.

De préférence, le système d'entraînement 90 comprend un moteur électrique à courant continu pour permettre le déplacement en translation de la bague mobile faisant office de moyens de fermeture 160 de la chambre d'infusion 7. Le moteur est référencé M sur les figures 6 à 21. De préférence, il est alimenté en très basse tension, de l'ordre de 12 Volt, par des moyens de conversion 900 d'un courant, le plus souvent alternatif délivré par le secteur. Ces moyens de conversion 900 comprennent un circuit électrique basique constitué d'un transformateur 901, d'un pont de diode 902, d'un régulateur de tension 903, par exemple du type UA7812, et de deux condensateurs 904, 904 de découplage pour parfaire le redressement et la régulation de tension continue à partir du secteur. Ces quelques composants peuvent être "montés en l'air" et ne nécessitent pas un assemblage sur circuit imprimé pour créer le courant continu nécessaire à l'alimentation du moteur.

Deux interrupteurs ou micro-interrupteurs AV et AR 205 sont disposés à chacune des extrémités de la course du dispositif de fermeture 160.

Un interrupteur référencé AR sur les figures 7 à 21 et disposé de sorte à être au contact du dispositif de fermeture 160 lorsque ce dernier est dans la première position. Pour rappel dans la première position, le dispositif de fermeture 160 empêche l'entrée de la dose 1 dans la chambre d'infusion 7. De manière préférée, dans cette première position, le dispositif de fermeture 160 libère une dose 1 éventuellement déjà située dans la chambre d'infusion 7 et, éventuellement il laisse libre l'ouverture de la trappe 30. Sur l'exemple illustré, la première position est atteinte lorsque le dispositif de fermeture 160 atteint sa butée arrière selon l'axe de déplacement 11.

Un interrupteur référencé AV sur les figures 7 à 21 est disposé de sorte à être au contact du dispositif de fermeture 160 lorsque ce dernier est dans la deuxième position. Pour rappel dans la deuxième position, le dispositif de fermeture 160 autorise l'entrée de la dose 1 dans la chambre d'infusion 7. De manière préférée, dans cette deuxième position, le dispositif de fermeture 160 empêche l'accès à la chambre d'infusion 7 par la sortie de cette dernière et obture la trappe 30. Sur l'exemple illustré, la deuxième position est atteinte lorsque le dispositif de fermeture 160 atteint sa butée avant selon l'axe de déplacement 11.

Ainsi ces deux interrupteurs AV et AR servent à définir les limites de la course de l'équipage mobile entraîné en translation par le moteur à courant continu. Chacun de ces deux interrupteurs AV et AR forme ainsi un capteur de fin de course pour le dispositif de fermeture 160. Plus précisément, l'interrupteur AR forme un capteur de position pour détecter que le dispositif de fermeture 160 est dans la première position. L'interrupteur AV forme un capteur de position pour détecter que le dispositif de fermeture 160 est dans la deuxième position.

Les interrupteurs AV et AR ainsi que les interrupteurs CP, CV, CC, CG qui seront décrits par la suite sont de type inverseur et disposent de trois connexions. Une arrivée de courant (le commun), une sortie de courant "normalement ouverte" et une sortie complémentaire "normalement fermée" en fonction de la position de leur contacteur électrique 213. Les interrupteurs AV, AR, CP, CV sont référencés sans distinction 205 sur les figures 3 à 5.

Le circuit d'alimentation est configuré de sorte que les interrupteurs AV et AR provoquent la coupure de l'alimentation du moteur lorsque la butée 203 portée par la pièce mobile 211 solidaire en translation du dispositif de fermeture 160 entre au contact des contacteurs 213 associés à chacun des ces interrupteurs AV et AR. Ainsi, ces interrupteurs AV et AR sont agencés pour ouvrir le circuit lorsque leurs contacteurs 213 sont activés par une pression appliquée par la butée 203.

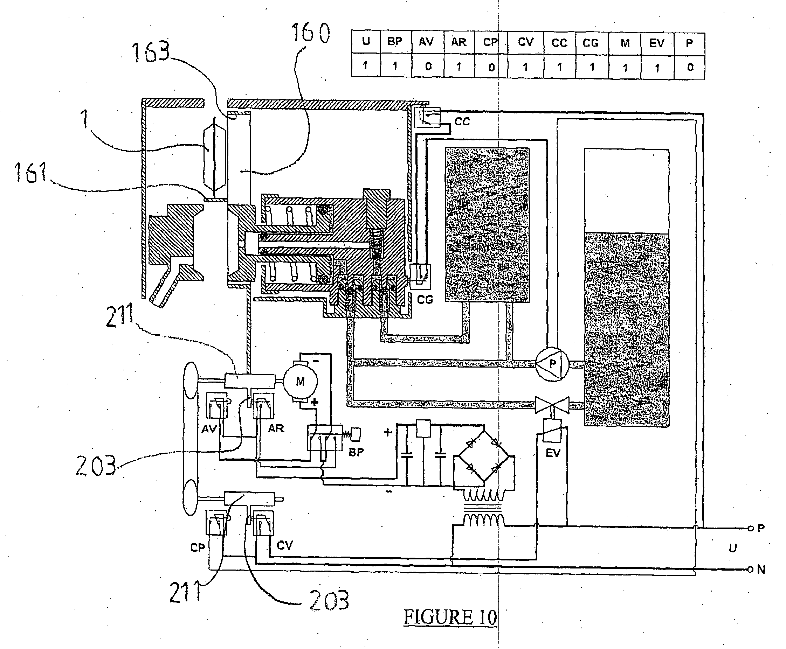

Le circuit électrique d'alimentation du moteur comprend également un bouton qui commande l'alimentation du moteur. Ce bouton est associé à un double inverseur. Il est référencé BP sur les figures 6 à 21. De préférence, il est de type bouton-poussoir et admet deux configurations. Chacun des deux interrupteurs AV et AR est connecté au bouton BP. La manipulation du bouton-poussoir BP permet d'inverser le sens du courant d'alimentation du moteur donc d'inverser son sens de rotation. Le bouton BP permet ainsi d'inverser le sens du déplacement du dispositif de fermeture 160. Dans une première configuration, le bouton poussoir BP connecte en série le moteur avec l'interrupteur AV et ne connecte pas en série le moteur avec l'interrupteur AR. Cette première configuration est par exemple illustrée en figure 7. Dans une deuxième configuration, le bouton poussoir BP connecte en série le moteur avec l'interrupteur AR et ne connecte pas en série le moteur avec l'interrupteur AV. Cette deuxième configuration est par exemple illustrée en figure 10.

Le schéma électrique, figurant sur les illustrations jointes, autorise les deux mouvement de translation contraire de la bague par simple manipulation du bouton poussoir BP. Il est aisé d'imaginer que ce bouton poussoir BP peut être installé en façade extérieure d'une machine à café expresso pour commander le lancement du cycle d'infusion puis son arrêt lorsque l'utilisateur à jugé que sa tasse est suffisamment pleine de café infusé.

Les deux premiers interrupteurs AV et AR sont doublés par deux autres interrupteurs identiques. Ces deux autres interrupteurs référencés CV et CP sur les figures sont installés sur la seconde vis sans fin 202a parallèle à la première vis sans fin 202 solidarisée au moteur à courant continu. Les moyens de transmission 208, sous forme de courroie crantée synchronisent le mouvement de rotation des deux vis sans fin 202, 202a et assurent un déplacement parallèle identique des deux doigts 206 d'entraînement de la bague mobile lors de son mouvement d'approvisionnement de la chambre d'infusion 7 en dose 1.

L'interrupteur CP commande la pompe vibrante hydraulique haute pression 400 tandis que l'interrupteur CV contrôle l'alimentation électrique de l'électrovanne de décharge 600 permettant de dépressuriser le circuit hydraulique en fin de cycle d'infusion.

Le circuit est configuré de sorte que l'interrupteur CP permet l'activation de la pompe 400 lorsqu'il est sollicité. Lorsque il n'est pas sollicité, l'interrupteur CP ouvre le circuit de manière à empêcher l'alimentation électrique et donc le fonctionnement de la pompe 400. Le circuit est également configuré de sorte que l'interrupteur CP est sollicité lorsque le dispositif de fermeture 160 est dans la deuxième position et n'est pas sollicité lorsque le dispositif de fermeture 160 n'est pas dans la deuxième position.

Le circuit est configuré de sorte que l'interrupteur CV permet l'activation de l'électrovanne 600 lorsqu'il est sollicité. L'activation de l'électrovanne 600 autorise le passage de l'eau au travers de la branche 707 de décharge et le retour de l'eau de poussée du vérin 40 jusqu'au réservoir 800. Lorsque il n'est pas sollicité, l'interrupteur CV ouvre le circuit de manière à empêcher l'alimentation électrique et donc le fonctionnement de l'électrovanne 400. Le circuit est également configuré de sorte que l'interrupteur CV est sollicité lorsque le dispositif de fermeture 160 est dans la première position et n'est pas sollicité lorsque le dispositif de fermeture 160 n'est pas dans la première position.

Ainsi, les interrupteurs AV et CP sont sollicités sensiblement simultanément et les interrupteurs AR et CV sont sollicités sensiblement simultanément.

### Etats de fonctionnement des organes de la machine

Un tel montage permet un fonctionnement séquentiel automatique du système d'infusion comme décrit sur les figures 6 à 19 représentant chaque étape du cycle d'infusion depuis l'insertion de la dose 1 jusqu'à son éjection en fin de cycle. Sur ces figures, un tableau récapitulatif indique l'état logique de chaque élément du circuit. L'interrupteur général de mise sous tension de la machine n'est pas représenté dans ce circuit. Son état est cependant symbolisé par la variable U dans le tableau récapitulatif d'état logique.

U à l'état 0 signifie que la machine n'est pas mise sous tension. U à l'état 1 signifie que la machine est mise sous tension.

BP à l'état 0 signifie que le bouton poussoir BP est dans sa première configuration. Il est activé pour faire tourner le moteur dans un premier sens correspondant dans cet exemple à un déplacement du dispositif de fermeture 160 dans vers l'arrière 13. BP à l'état 1 signifie que le bouton poussoir BP est dans sa deuxième configuration. Il est activé pour faire tourner le moteur dans un deuxième sens opposé au premier, correspondant dans cet exemple à un déplacement du dispositif de fermeture 160 dans vers l'avant 12.

AV à l'état 0 signifie que l'interrupteur AV est fermé et ne bloque pas l'alimentation du moteur. AV à l'état 1 signifie que l'interrupteur AV est ouvert et bloque l'alimentation du moteur lorsque le bouton BP est dans sa deuxième configuration (état à 1).

AR à l'état 0 signifie que l'interrupteur AR est fermé et ne bloque pas l'alimentation du moteur. AR à l'état 1 signifie que l'interrupteur AR est ouvert et bloque l'alimentation du moteur lorsque le bouton BP est dans sa première configuration ('état à 0).

CP à l'état 0 signifie que l'interrupteur CP est ouvert et bloque l'alimentation de la pompe 400. CP à l'état 1 signifie que l'interrupteur CP est fermé et autorise l'alimentation de la pompe 400.

CV à l'état 0 signifie que l'interrupteur CV est ouvert et bloque l'alimentation de l'électrovanne 600, empêchant de ce fait le passage du fluide à travers l'électrovanne 600. CV à l'état 1 signifie que l'interrupteur CV est fermé et autorise l'alimentation de l'électrovanne 600, autorisant de ce fait le passage du fluide à travers l'électrovanne 600.

CC à l'état 0 signifie que l'interrupteur CC est ouvert et bloque l'alimentation de la pompe 400. CC est à l'état 0 lorsque le capot 21 n'est pas correctement positionné sur la machine. CC à l'état 1 signifie que l'interrupteur CC est fermé et autorise l'alimentation de la pompe 400.

CG à l'état 0 signifie que l'interrupteur CG est ouvert et bloque l'alimentation de la pompe 400. CG est à l'état 0 lorsque le système d'infusion 10 n'est pas correctement positionné sur la machine. CG à l'état 1 signifie que l'interrupteur CG est fermé et autorise l'alimentation de la pompe 400.

M à l'état 0 signifie que le moteur ne tourne pas et que le dispositif de fermeture 160 est alors immobile. M à l'état 1 signifie que le moteur tourne et déplace de ce fait le dispositif de fermeture 160 entre la première et la deuxième position ou alternativement.

EV à l'état 0 signifie que l'électrovanne 600 n'est pas alimentée, empêchant de ce fait le passage du fluide à travers l'électrovanne 600. EV à l'état 1 signifie que l'électrovanne 600 est alimentée, autorisant de ce fait le passage du fluide à travers l'électrovanne 600.

P à l'état 0 signifie que la pompe 400 n'est pas alimentée. P à l'état 1 signifie que la pompe 400 est alimentée et délivre un fluide sous pression.

De manière optionnelle, la machine comprend des organes de sécurité complémentaires. Par exemple, elle comprend un interrupteur CG associé à un système d'infusion 10 et agencé de sorte que cet interrupteur CG ouvre le circuit d'alimentation de la pompe 400 lorsque le système d'infusion 10 n'est pas correctement positionné sur le reste de la machine. Lorsque le système d'infusion 10 est correctement solidarisé à la machine cet interrupteur CG est en position fermée et autorise l'alimentation de la pompe 400. Cet interrupteur CG fait ainsi office de capteur de bon positionnement du système d'infusion 10 sur la machine.

De manière alternative ou cumulée à l'interrupteur CG, la machine peut également comprendre un interrupteur CC associé à un capot 21 rapporté sur le système d'infusion 10. Ce capot 21 est conformé pour protéger le système d'infusion 10 et empêcher à un utilisateur d'accéder au système d'infusion 10 lors du fonctionnement. De préférence, la trappe 30 est pratiquée dans le capot 21, l'interrupteur CC est configuré de sorte à ouvrir le circuit pour bloquer l'alimentation de la pompe 400 lorsque le capot 21 n'est pas positionné de manière adéquate. Cet interrupteur CC est configuré de sorte à ne pas bloquer l'alimentation de la pompe 400 lorsque le capot 21 est correctement positionné sur la machine. Cet interrupteur CC fait ainsi office de capteur de présence du capot 21.

La présence des interrupteurs CG et/ou CC augmentent significativement le niveau de sécurité de la machine. Dans des variantes non illustrées, les interrupteurs CC et CG faisant office de capteurs de présence d'un organe de la machine tel qu'un capot 21 ou qu'un système d'infusion 10 peuvent être utilisés pour alimenter les moyens d'alerte. Ainsi, les interrupteurs CC ou CG peuvent par exemple alimenter un voyant lumineux présent sur la face de la machine ou un signal sonore d'indication d'erreur pour avertir l'utilisateur.

Sur les figures 6 à 19, le système d'infusion 10 et le capot 21 sont disposés dans leur position de fonctionnement. Les interrupteurs CC et CG ne bloquent donc pas l'alimentation de la pompe 400.

### Exemple de fonctionnement de la machine

En figure 6, la machine est à l'état neutre, aucune tension n'étant fournie. Le dispositif de fermeture 160 est dans la première position, la butée 203 portée par la pièce mobile 211 sollicite alors l'interrupteur AR (état à 1) et la butée complémentaire 203 sollicite l'interrupteur CV (état à 1). Comme aucune tension n'est fournie à la machine, l'électrovanne ne fonctionne cependant pas.

En figure 7, la machine est mise sous tension. Le statut de l'interrupteur CV est à l'état 1. Une tension étant fournie à la machine, l'électrovanne 600 fonctionne et laisse passer le fluide. Le moteur ne tourne pas puisque le bouton BP connecte en série le moteur avec l'interrupteur AR et que ce dernier est ouvert (état 1). L'interrupteur CP étant ouvert (état 0), la pompe 400 ne fonctionne pas.

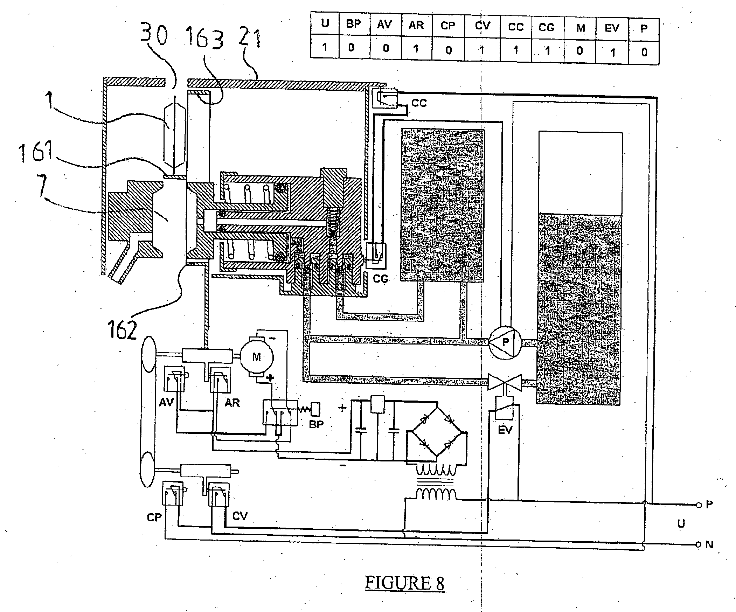

En figure 8, une dose 1 est introduite dans la machine. Le dispositif de fermeture 160 étant dans la première position, les moyens d'obstruction 163 autorisent le passage de la dose 1 à travers la trappe 30 du capot 21. Les moyens de fermeture amont 161 réceptionnent la dose 1 en amont de la chambre d'infusion 7.

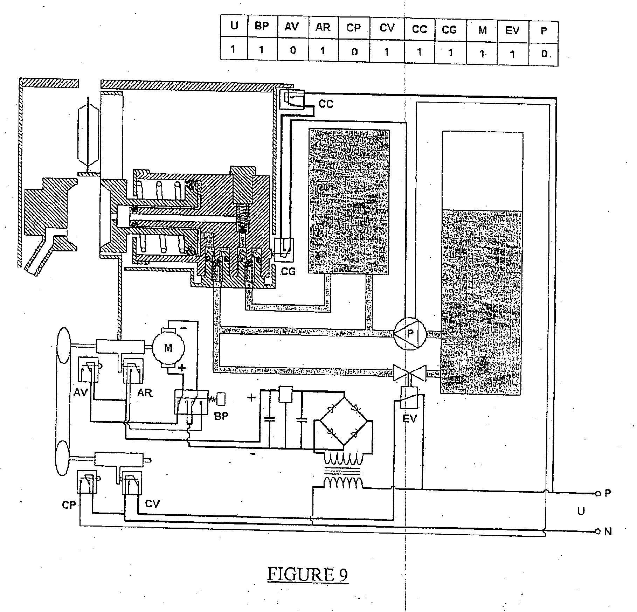

En figure 9, le bouton-poussoir BP est actionné. Il est alors positionné dans sa deuxième configuration (état à 1), les interrupteurs associés au bouton BP ne connectent alors plus l'interrupteur AR en série avec le moteur. L'interrupteur AR ne bloque alors plus l'alimentation du moteur. L'interrupteur AV est alors connecté en série avec le moteur. Ce dernier est fermé (état à 0). Le circuit d'alimentation du moteur est donc fermé autorisant son fonctionnement. L'état du moteur passe donc à 1.

En figure 10, le moteur a entraîné en translation le dispositif de fermeture 160 depuis l'arrière 13 vers l'avant 12.

Les pièces mobiles 211 portant les butées 203 et solidaires en déplacement du dispositif de fermeture 160 ne sont alors plus en contact avec les interrupteurs AR et CV. L'interrupteur AR se referme alors (état à 0), l'interrupteur CV s'ouvre alors (état à 0) et bloque l'électrovanne 600, empêchant de ce fait le passage du fluide.

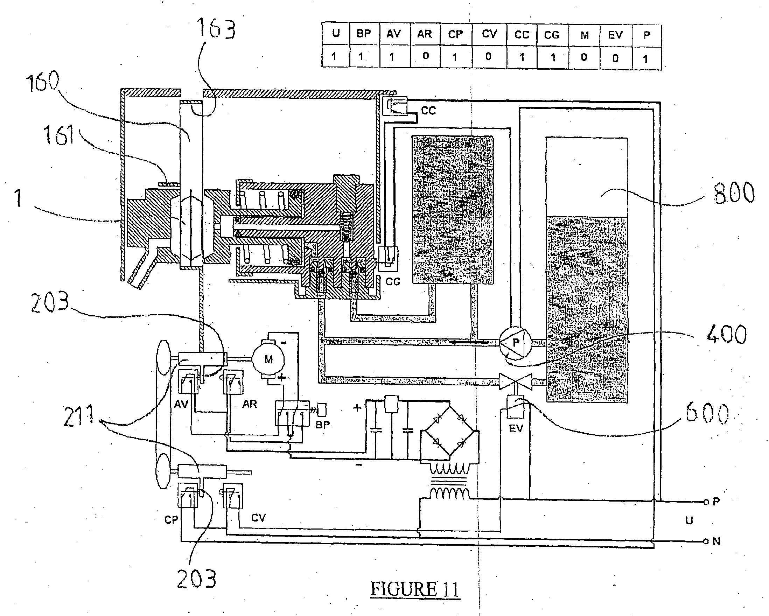

Le moteur tourne jusqu'à ce que le dispositif de fermeture 160 parvienne dans la deuxième position. Les butées 203 entrent alors au contact des interrupteurs AV et CP, cette phase est illustrée en figure 11.

L'interrupteur AV (état à 1), toujours connecté en série au moteur, ouvre le circuit d'alimentation de ce dernier provoquant son arrêt et l'immobilisation du dispositif de fermeture 160 dans la deuxième position. Les moyens d'obstruction 163 obturent alors la trappe 30 ; les moyens de fermeture amont 161 s'effacent pour autoriser la dose 1 à pénétrer dans la chambre d'infusion 7, les moyens de fermeture aval 162 réceptionnent la dose 1 et empêchent la sortie de cette dernière hors de la chambre d'infusion 7.

L'interrupteur CP se referme (état à 1). Comme les interrupteurs CC et CG sont également fermés, la pompe 400 est alimentée en électricité et fonctionne (état de la pompe à 1). Le fluide issu du réservoir 800 est alors amené sous pression dans le circuit hydraulique.

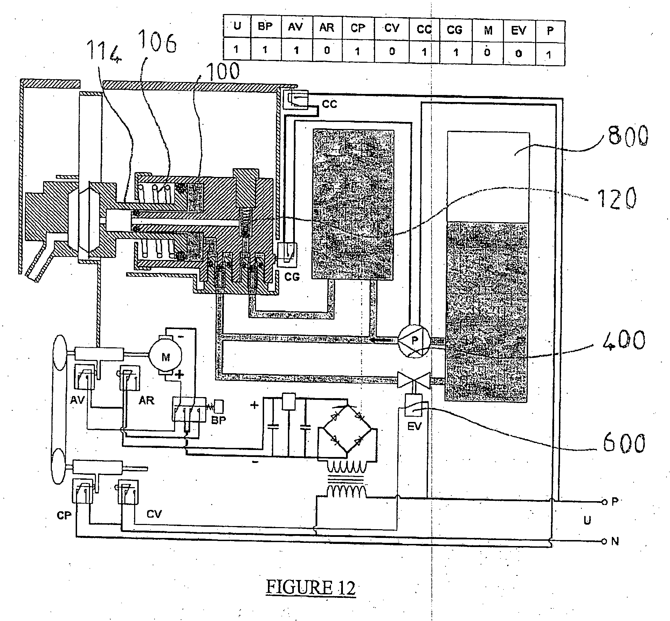

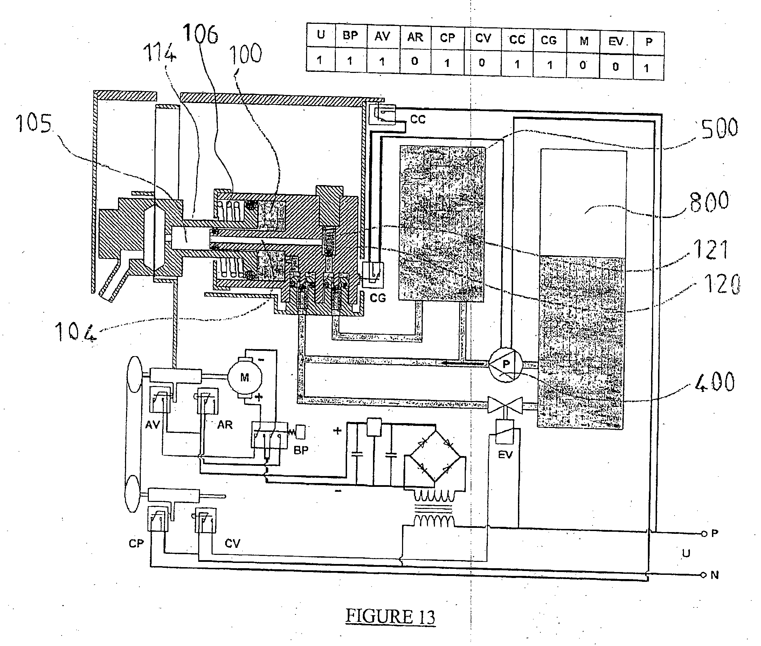

Comme illustré en figure 12, le fluide atteint une pression suffisante pour contrer l'effort du ressort de retour 106 et pour déplacer le piston 114 vers l'avant. Le fluide sous pression remplit alors la chambre de poussée 100, provoquant par la même occasion une baisse du niveau de fluide dans le réservoir 800. En figure 13, la pression du fluide est suffisante pour amener le piston au contact de la portion fixe de la chambre d'infusion 7 et assurer la fermeture et l'étanchéité de cette dernière.

La pression du fluide n'est cependant pas encore suffisante pour contrer l'effort de poussée imposé par le ressort 121 au clapet taré 120. Le fluide chauffé issu de la chaudière 500 est donc bloqué par le clapet taré 120 et ne parvient pas dans le canal d'alimentation 104, ni dans le passage 105, ni a fortiori dans la chambre d'infusion 7.

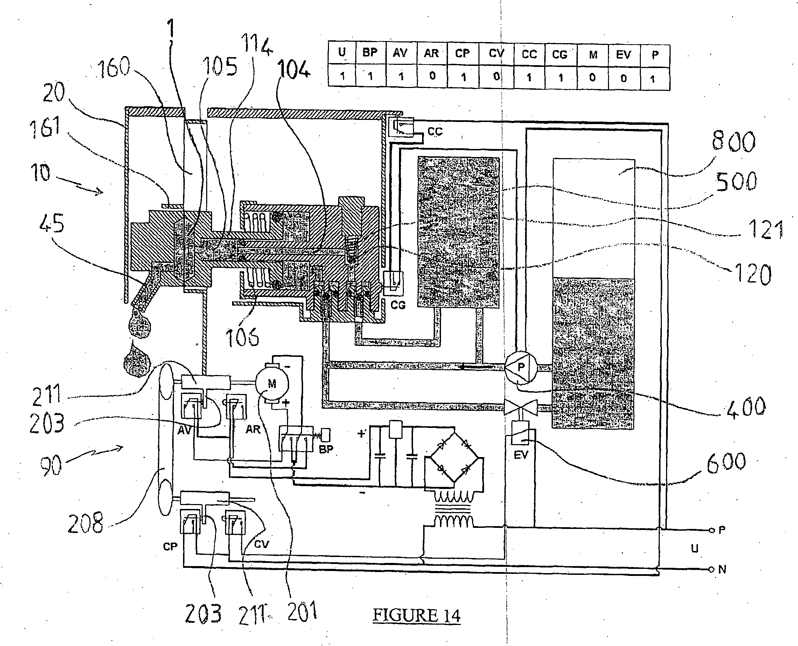

En figure 14, la pompe 400 a élevé la pression du fluide au-delà du seuil de pression prédéfini pour obtenir une infusion de qualité. Le fluide parvient donc à repousser le clapet taré 120 et s'introduit dans la chambre d'infusion 7 via le canal d'alimentation 104 et le passage 105. L'infusion de la dose 1 se produit alors et le produit infusé s'écoule hors de la chambre d'infusion 7 dans le conduit d'écoulement 45.

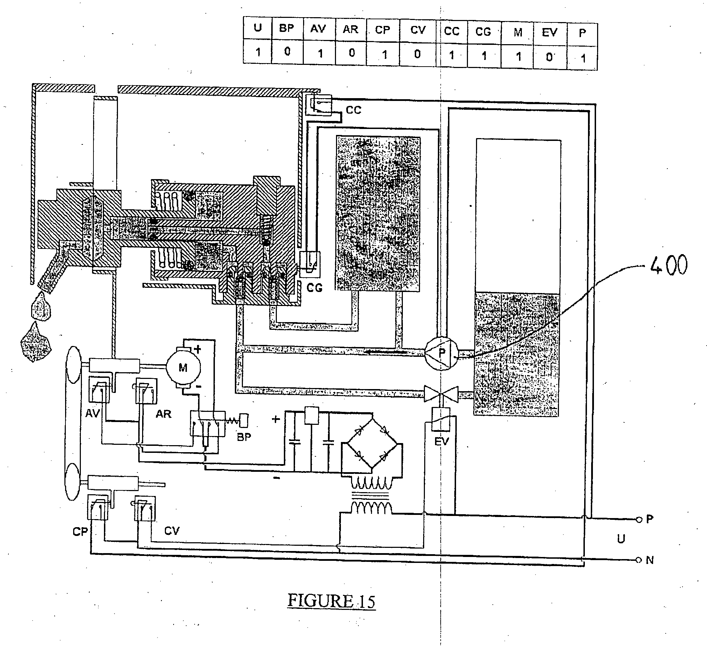

La figure 15 illustre l'étape à laquelle l'utilisateur décide de stopper l'infusion, la boisson obtenue étant à son goût suffisamment « serrée » ou au contraire « allongée ». L'utilisateur actionne alors le bouton BP dont l'état repasse à 0 (première configuration). Le moteur est alors connecté en série avec l'interrupteur AR. Or, ce dernier est fermé (état à 0). Le moteur est alors alimenté en électricité.

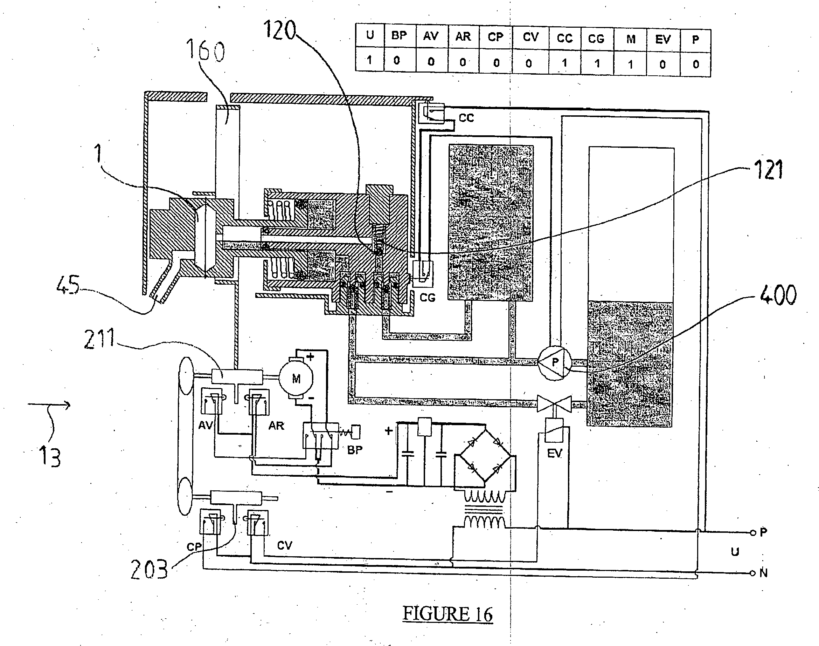

La figure 16 illustre une étape dans laquelle le moteur tourne de sorte à déplacer le dispositif de fermeture 160 vers l'arrière 13. Les butées 203 solidaires du dispositif de fermeture 160 ne sont alors plus en contact avec les interrupteurs AV et CP dont les états passent alors à 0. L'interrupteur CP ouvre le circuit d'alimentation de la pompe 400 et stoppe le fonctionnement de cette dernière.

Le fluide à l'intérieur du circuit hydraulique se dépressurise naturellement, notamment au travers de la chambre d'infusion 7 par le conduit d'écoulement 45. Le clapet taré 120, poussé par son ressort taré 121, revient alors dans sa position de blocage du fluide.

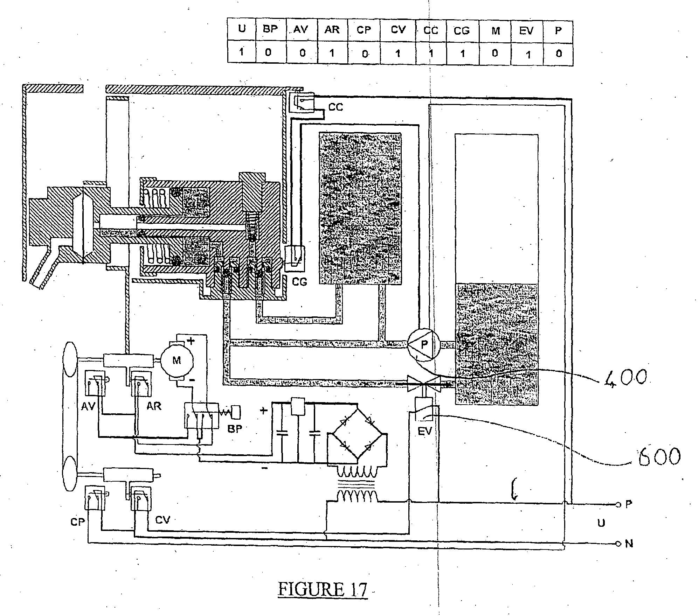

Sur la figure 17, le dispositif de fermeture 160 atteint sa première position. Les interrupteurs AR et CV sont alors sollicités. L'interrupteur AR, en passant à l'état 1 ouvre le circuit d'alimentation du moteur et interrompt l'avancée du dispositif de fermeture 160. L'interrupteur CV referme le circuit d'alimentation de l'électrovanne 600 pour ouvrir cette dernière. Une rapide dépressurisation peut alors s'effectuer avec un retour du fluide sous pression à l'intérieur du réservoir 800.

On notera que comme les circuits d'alimentation sous tension secteur de la pompe 400 et de l'électrovanne 600 sont séparés et à des positions opposées de la course du dispositif de fermeture 160, ces deux composants ne peuvent être alimentés simultanément. Lorsque l'alimentation de la pompe est interrompu, l'électrovanne 600 de dépressurisation est activé avec un délai correspondant au temps de parcours du dispositif de fermeture 160 de la distance séparant ses deux positions extrêmes, délai suffisant pour permettre une dépressurisation naturelle de la chambre d'infusion 7 par l'orifice de sortie de la boisson infusée hors de la chambre d'infusion 7. Ainsi, le risque d'une brusque dépressurisation de la chambre d'infusion 7 en fin de cycle provoquant une aspiration et un blocage d'une dose 1 sur la face interne de la portion de chambre 42 mobile est éliminé.

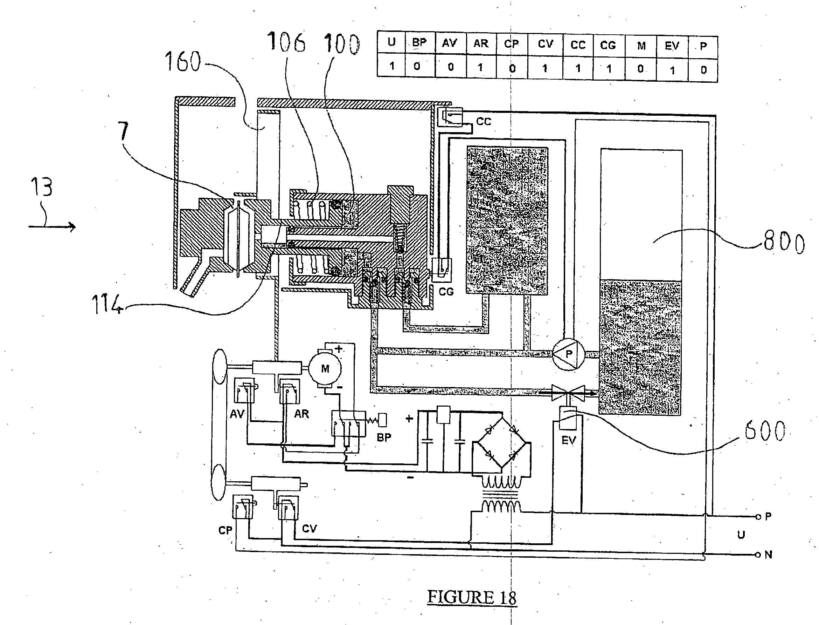

En figure 18, l'état des différents organes de la machine n'a pas varié mais la pression du fluide a continué à baissé. Le ressort de retour 106 associé au piston 114 repousse alors le piston 114 vers l'arrière 13, le volume de la chambre de poussée 100 diminue chassant le fluide contenu vers le réservoir 800 au travers de l'électrovanne de décharge 600. La chambre d'infusion 7 s'ouvre alors.

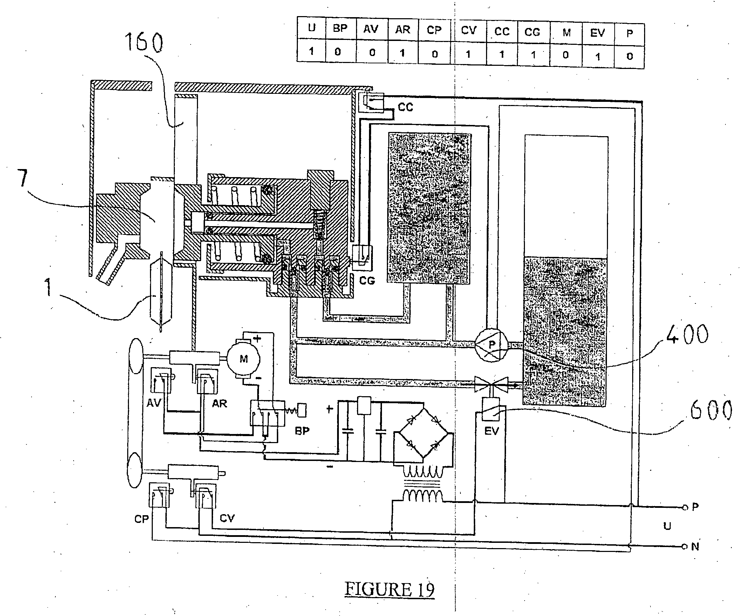

En figure 19, la chambre d'infusion 7 est totalement ouverte, la dose 1 peut ainsi s'échapper.

Le cycle d'infusion est alors s'achevé et un nouveau cycle d'infusion peut débuter. La machine est à nouveau dans l'état illustré en figure 7.

L'invention permet ainsi un fonctionnement automatique sans nécessiter de carte électronique. En outre, ce fonctionnement est séquentiel et offre une très grande fiabilité.

En équipant la machine, pilotée par un tel circuit de commande, d'une chaudière de type « thermo-block »ou de type « boiler », qui est régulée en température de façon autonome par un thermostat de régulation doublé d'un thermostat de sécurité, l'invention permet de se passer d'une carte électronique pour assurer l'infusion complètement automatique.

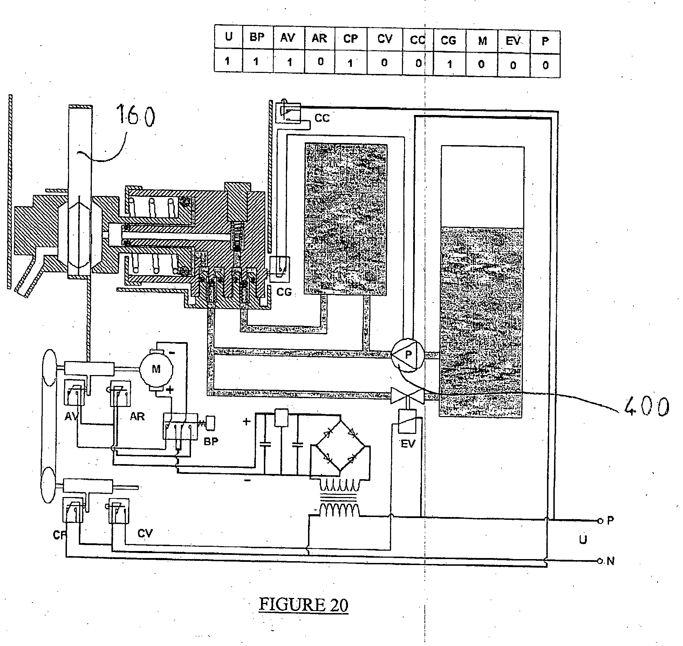

En figure 20, on a illustré le retrait du capot 21. L'interrupteur CC associé au capot 21 s'ouvre alors (état à 0) et bloque l'alimentation de la pompe. Cette dernière ne peut alors pas fonctionner, les risques d'accidents sont donc réduits.

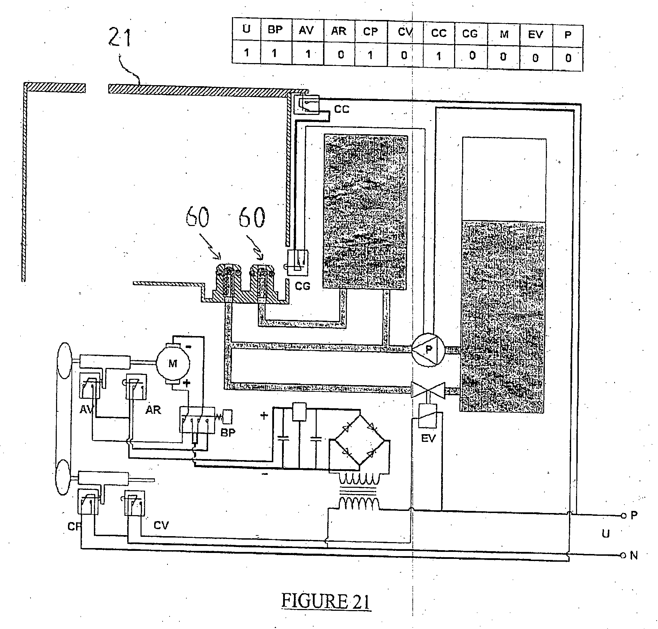

En figure 21, on a illustré le retrait du système d'infusion 10 par rapport au reste de la machine. L'interrupteur CG associé au système d'infusion 10 s'ouvre alors (état à 0) et bloque l'alimentation de la pompe 400. Cette dernière ne peut alors pas fonctionner. On peut donc retirer le système d'infusion 10 en vue de son nettoyage ou de sa maintenance sans risque de mise en route intempestive de la pompe. La sécurité en est par conséquent améliorée.

En permettant un fonctionnement automatique particulièrement fiable, sans nécessiter de carte électronique ou de composant à logique programmée, l'invention présente ainsi un coût de revient réduit, un impact environnemental limité et une fiabilité significativement améliorée.

Ainsi, par une combinaison astucieuse des organes de la machine et d'interrupteurs, l'invention permet d'asservir le fonctionnement de la machine au bon positionnement du dispositif de fermeture 160. Les risques de dysfonctionnement du système 1 sont par conséquent limités.

Plus précisément, le système 10 offre une sécurité élevée pour un utilisateur. En effet, si la trappe 30 n'est pas masquée par les moyens d'obstruction 163 et demeure ouverte du fait de la présence d'un obstacle quelconque tel notamment que des doigts, le dispositif de fermeture 160 ne peut atteindre la deuxième position. Le contacteur CP n'est alors pas sollicité. La pompe ne fonctionne donc pas et ni la translation du vérin 40, ni l'injection d'eau dans la chambre d'infusion 7 ne peuvent être enclenchées. Le système présente donc un fonctionnement séquentiel et conditionnel.

Par ailleurs, les moyens d'asservissement permettent également d'interdire le fonctionnement de la pompe, lorsque la présence d'un obstacle en partie basse du système 10 empêche un positionnement correct du dispositif de fermeture 160. Ainsi, lorsque le bac de récupération est plein et qu'une dose 1 déjà infusée ne peut être évacuée correctement et empêche le fonctionnement adéquat du dispositif de fermeture 160, la pompe ne peut fonctionner et des moyens d'alerte sont éventuellement activés. Il en est de même si un utilisateur insère des doigts à travers l'ouverture aval de la chambre d'infusion 7. L'eau chaude n'est pas distribuée à la chambre d'infusion 7 et le vérin 40 n'est pas actionné. Les risques de brûlure ou de coincement de doigts sont donc évités même en cas d'utilisation anormale du système.

En outre, l'invention permet de préserver l'intégrité d'une dose 1 qui serait présente dans la chambre d'infusion 7 alors que le dispositif de fermeture 160 est bloqué. En effet, l'actionnement de la pompe aurait pour effet d'écraser la dose 1 et de l'humidifier.

L'invention n'est pas limitée aux modes de réalisation décrits mais s'étend à tout mode de réalisation conforme à son esprit.

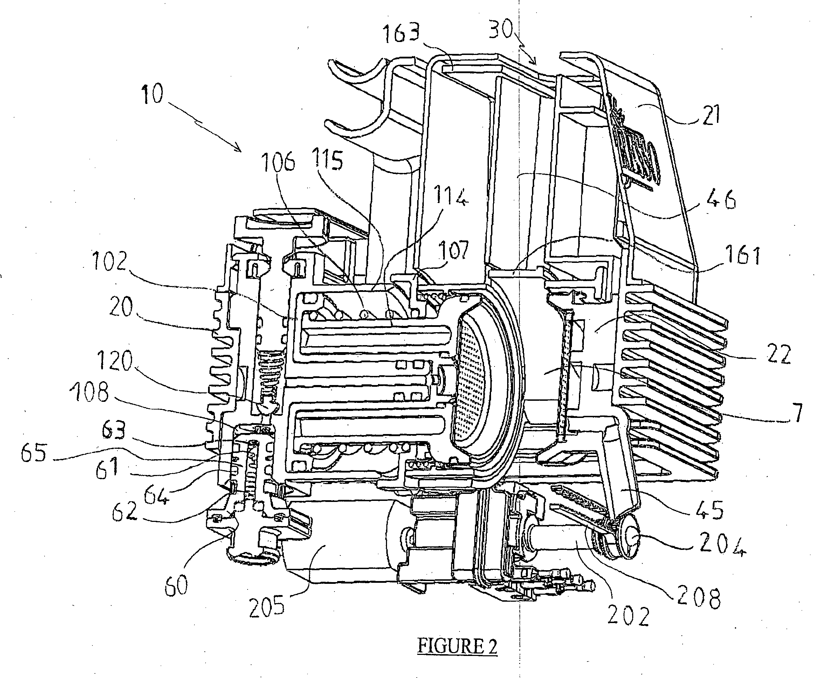

Notamment, on pourra prévoir que les interrupteurs AV et AR sont sollicités par une même butée 203 comme schématisé sur les figures 7 à 21 ou sont sollicités par deux butées 203, 203 distinctes comme illustrés sur les figures 2 à 5. Il en est de même pour la sollicitation des interrupteurs CP et CV.

Dans le cas ou deux butées 203, 203 actionnent les interrupteurs AV et AR, on pourra prévoir que ces deux butées 203, 203 sont portées par une même pièce mobile 211 comme illustré ou sont portées par des pièces mobiles distinctes (non illustré).

On pourra aussi prévoir d'associer les interrupteurs CV et AR d'une part et CP et AV d'autre part à une même butée 203 ou à des butées 203 entraînées par une même pièce mobile 211 sans recourir à deux pièces mobiles 211, 211a, chacune entraînée par une vis sans fin 202, 202a et mutuellement couplée par un moyen de transmission 208.

### REFERENCES

| | | | |
|---|---|---|---|
| 1. | Dose | 100. | chambre de poussée |
| 10. | Système | 101. | surface de poussée |
| 11. | Axe longitudinal | 102. | fond du vérin |
| 12. | Sens avant | 103. | moyens d'emmanchement |
| 13. | Sens arrière | 104. | canal d'alimentation |
| 20. | Bâti | 105. | passage |
| 21. | Capot | 106. | ressort de retour |
| 22. | Demi chambre fixe | 107. | butée pour ressort de vérin |
| 24. | Conduit d'arrivée | 108. | entrée de fluide à infuser |
| 30. | Trappe | 109. | entrée de fluide de poussée |
| 40. | Vérin | 112. | doigt pour clapet anti-retour |
| 42. | Demi chambre mobile | 114. | piston |
| 45. | Conduit d'évacuation | 115. | cylindre |
| 46. | Moyens de guidage | | |
| 60. | tétine | | |
| 61. | clapet anti-retour | 120. | clapet taré |
| 62. | ressort pour clapet anti-retour | 121. | ressort pour clapet taré |
| 63. | orifice pour clapet anti-retour | 124. | bouchon pour alésage vertical |
| 64. | joints de tétine | | |
| 65. | corps de tétine | | |
| | | | |
| 7. | Chambre d'infusion | 160. | Dispositif de fermeture |
| 400. | pompe | 161. | Moyens de fermeture amont |
| 500. | chaudière | 162. | Moyens de fermeture aval |
| 600. | électrovanne de décharge | 163. | Moyens d'obstruction |
| 800. | réservoir | 165. | Bras |
| | | 166. | Butée |
| 701. | branche | 167. | portion formant saillie |
| 702. | embranchement | 169. | Coulisseau |
| 703. | branche | | |
| 704. | branche | | |
| 705. | branche | | |
| 706. | embranchement | | |
| 707. | branche | | |
| | | | |
| | | | |
| 200. | réservoir | | |
| 300. | débimètre | | |
| 400. | pompe | | |
| 500. | chaudière | | |
| 600. | électrovanne de décharge | | |
| | | | |
| 90. | Système d'entraînement | | |
| | | | |
| 201. | moyen d'entraînement du dispositif de fermeture | | |
| 202. | vis sans fin côté moyen d'entraînement | | |
| 202a. | vis sans fin côté opposé au moyen d'entraînement | | |
| 203. | butée coopérant avec le contacteur de fin de course | | |
| 204. | pignon menant | | |
| 204a. | pignon mené | | |
| 205. | micro-interrupteur | | |
| 206. | doigt d'entraînement | | |
| 208. | moyen de transmission | | |
| 210. | palier sortie moteur | | |
| 211. | pièce mobile le long d'une vis sans fin | | |
| 211a. | coude | | |
| 213. | contacteur de fin de course | | |
| 214. | palier entre pignon et vis sans fin | | |
| 218. | surface filetée | | |
| | | | |
| 900. | moyens de conversion de tension | | |
| 901. | transformateur | | |
| 902. | pont de diodes | | |
| 903. | régulateur de tension | | |
| 904. | condensateur de découplage | | |

## Revendications

1. Machine de production de boisson par infusion d'un produit à infuser enfermé dans une dose (1), la machine comprenant :
• un système d'infusion (10) comprenant une chambre d'infusion (7) destinée à recevoir le produit à infuser enfermé dans la dose (1), la chambre d'infusion (7) comprenant :
∘ un actionneur de la chambre d'infusion (7),
∘ deux portions de chambres (22, 42) agencées pour être mutuellement éloignées ou rapprochées par l'actionneur afin de respectivement ouvrir ou fermer la chambre d'infusion (7),
• un circuit hydraulique comprenant une pompe (400) et une chaudière (500) disposés en amont de la chambre d'infusion (7) pour alimenter le système d'infusion (10) en fluide sous pression,
• un dispositif de fermeture (160) comprenant des moyens de fermeture amont (161) et configuré pour passer alternativement d'une première à une deuxième position dans lesquelles les moyens de fermeture amont (161) respectivement empêchent et autorisent l'entrée de la dose (1) dans la chambre d'infusion (7),
• un système d'entraînement (90) configuré pour faire passer alternativement le dispositif de fermeture (160) de la première à la deuxième position,
• le système d'entraînement (90) comprend un moteur électrique alimenté en électricité par un circuit électrique d'alimentation
**caractérisée en ce qu'**elle comprend:
• au moins un interrupteur AR agencé pour être sollicité dans la première position par une pièce mobile (211) solidaire en déplacement du dispositif de fermeture (160), l'interrupteur AR étant disposé dans le circuit électrique d'alimentation du moteur de sorte que l'ouverture de l'interrupteur AR bloque l'alimentation électrique du moteur, l'interrupteur AR étant ouvert lorsqu'il est sollicité,
• au moins un interrupteur AV agencé pour être sollicité dans la deuxième position par une pièce mobile (211) solidaire en déplacement du dispositif de fermeture (160), l'interrupteur AV étant disposé dans le circuit d'alimentation électrique du moteur de sorte que l'ouverture de l'interrupteur AV bloque l'alimentation électrique du moteur, l'interrupteur AV étant ouvert lorsqu'il est sollicité.

2. Machine selon la revendication précédente comprenant un bouton BP actionnable par un utilisateur, admettant une première et une deuxième configuration et des interrupteurs de commande associés au bouton BP et agissant sur le circuit électrique d'alimentation du système d'entraînement (90) et dans laquelle :
• l'interrupteur AR est connecté en série avec le moteur lorsque le bouton BP de commande est dans la première configuration, est configuré pour être ouvert lorsqu'il est sollicité et est configuré pour être fermé lorsqu'il n'est pas sollicité,
• l'interrupteur AV est connecté en série avec le moteur lorsque le bouton de commande est dans la deuxième configuration, est configuré pour être ouvert lorsqu'il est sollicité et est configuré pour être fermé lorsqu'il n'est pas sollicité.

3. Machine selon l'une quelconque des revendications précédentes dans laquelle les interrupteurs AR et AV coopèrent avec une même pièce mobile.

4. Machine selon l'une quelconque des revendications précédentes agencée de sorte que dans la première position le dispositif de fermeture (160) empêche l'entrée d'une dose (1) dans la chambre (7) et autorise la sortie hors de la chambre (7) d'une dose présente dans la chambre (7).

5. Machine selon l'une quelconque des revendications précédentes dans laquelle la chambre d'infusion (7) est définie par une première (22) et une deuxième (42) portions de chambre (7) aptes à être mutuellement rapprochées ou éloignées et dans laquelle le dispositif de fermeture (160) est distinct des première (22) et deuxième (42) portions de chambre (7).

6. Machine selon l'une quelconque des revendications précédentes comprenant un interrupteur CP connecté en série à un circuit d'alimentation de la pompe (400), configuré pour autoriser l'alimentation de la pompe (400) lorsqu'il est sollicité et configuré pour bloquer l'alimentation de la pompe (400) lorsqu'il n'est pas sollicité et configuré pour être sollicité par une pièce mobile (211) solidaire en déplacement avec le dispositif de fermeture (160) lorsque le dispositif de fermeture (160) est dans la deuxième position.

7. Machine selon la revendication précédente dans laquelle le circuit hydraulique comprend une électrovanne de décharge (600) agencée pour permettre la dépressurisation du fluide contenu dans le circuit hydraulique lorsqu'elle est alimentée en électricité.

8. Machine selon la revendication précédente comprenant un interrupteur CV connecté en série à un circuit d'alimentation en électricité de l'électrovanne (600), configuré pour autoriser l'alimentation de l'électrovanne (600) lorsqu'il est sollicité, configuré pour bloquer l'alimentation de l'électrovanne (600) lorsqu'il n'est pas sollicité et configuré pour être sollicité par une pièce mobile (211) solidaire en déplacement avec le dispositif de fermeture (160) lorsque le dispositif de fermeture (160) est dans la première position.

9. Machine selon la revendication précédente dans laquelle les interrupteurs AV et AR sont sollicités par une première pièce mobile (211) solidaire en déplacement du dispositif de fermeture (160) et dans laquelle les interrupteurs CP et CV sont sollicités par une deuxième pièce mobile (211) solidaire en déplacement du dispositif de fermeture (160).

10. Machine selon la revendication précédente dans laquelle la première pièce mobile (211) est entraînée en translation par une première vis sans fin (202) et la deuxième pièce mobile (211) est entraînée en translation par une deuxième vis sans fin (202a) distincte de la première vis sans fin (202) et dans laquelle la première vis sans fin (202) est de préférence solidaire en rotation du moteur.

11. Machine selon l'une quelconque des revendications 3 à 10 dans laquelle les interrupteurs CP et CC sont positionnés de sorte que le temps entre le blocage de l'alimentation de la pompe (400) et l'alimentation de l'électrovanne (600) permet au moins en partie une dépressurisation du circuit hydraulique par une sortie de la chambre d'infusion (7) et dans laquelle, de préférence, le temps entre le blocage de l'alimentation de la pompe (400) et l'alimentation de l'électrovanne (600) est d'environ 0.1 secondes.

12. Machine selon l'une quelconque des revendications précédentes dans lequel le système d'infusion (10) est configuré pour être solidarisé de manière amovible sur un module de la machine comprenant la chaudière (500) et la pompe (400) et comprend un interrupteur CG, l'interrupteur CG étant connecté en série à un circuit d'alimentation de la pompe (400), étant agencé pour coopérer avec le système d'infusion (10) de sorte que lorsque le système d'infusion (10) est solidarisé sur ledit module de la machine l'interrupteur CG est alors fermé et ne bloque pas l'alimentation de la pompe (400), et étant agencé de sorte que lorsque le système d'infusion (10) n'est pas solidarisé sur ledit module de la machine l'interrupteur CG est alors ouvert et bloque l'alimentation de la pompe (400).

13. Machine selon l'une quelconque des revendications 3 à 12 comprenant un capot (21) configuré pour être solidarisé de manière amovible sur le système d'infusion (10) et un interrupteur CC, l'interrupteur CC étant connecté en série à un circuit d'alimentation de la pompe (400), étant agencé pour coopérer avec le capot (21) de sorte que lorsque le capot (21) est solidarisé sur le système d'infusion (10) l'interrupteur CC est alors fermé et ne bloque pas l'alimentation de la pompe (400), et étant agencé de sorte que lorsque le capot (21) n'est pas solidarisé sur le système d'infusion (10) l'interrupteur CG est alors ouvert et bloque l'alimentation de la pompe (400).

14. Machine selon l'une quelconque des revendications précédentes dans laquelle le dispositif de fermeture (160) comprend des moyens de fermeture aval (162) agencés de manière à sélectivement empêcher ou à autoriser la sortie de la dose (1) hors de la chambre (7), le dispositif de fermeture (160) étant agencé pour passer alternativement :
∘ d'une première position dans laquelle :
- les moyens de fermeture amont (161) empêchent l'entrée de la dose (1) dans la chambre (7),
- les moyens de fermeture aval (162) autorisent la sortie de la dose (1) hors de la chambre (7),
∘ à une deuxième position dans laquelle :
- les moyens de fermeture amont (161) autorisent l'entrée de la dose (1) dans la chambre (7),
- les moyens de fermeture aval (162) permettent la réception de la dose (1) introduite dans la chambre (7) et empêchent la sortie de cette dernière hors de la chambre (7),

15. Procédé de production de boisson par infusion d'un produit à infuser enfermé dans un volume intérieur d'une dose (1) constituée par l'assemblage de couches jointes par leurs périphéries au niveau d'un pourtour, utilisant une machine selon l'une quelconque des revendications précédentes comprenant les étapes suivantes :
- introduire une dose (1) dans la machine,
- réceptionner la dose (1) en amont de la chambre d'infusion (7) au niveau des moyens de fermeture amont (161),
- actionner un bouton de commande BP pour automatiquement déclencher les étapes suivantes :
∘ fermer une électrovanne de décharge (600),
∘ déplacer le dispositif de fermeture (160) de sorte à laisser la dose (1) pénétrer dans la chambre d'infusion (7) et la retenir dans la chambre d'infusion (7),
∘ déclencher l'alimentation de la pompe (400),
∘ refermer la chambre d'infusion (7),
∘ infuser la dose (1),
- actionner le bouton de commande BP pour automatiquement déclencher les étapes suivantes :
∘ désactiver la pompe (400),
∘ activer l'électrovanne de décharge (600),
∘ ouvrir la chambre d'infusion (7),
∘ déplacer le dispositif de fermeture (160) de sorte à laisser la dose (1) s'échapper hors de la chambre d'infusion (7) et à empêcher une autre dose d'entrer dans la chambre d'infusion (7).

## Patentansprüche

1. Maschine zur Herstellung von Getränken per Aufguss eines in einer Dosis (1) eingeschlossenen aufzugießenden Produkts, wobei die Maschine umfasst:
* ein Aufgusssystem (10) umfassend eine Aufgusskammer (7), die zur Aufnahme des in der Dosis (1) eingeschlossenen, aufzugießenden Produkts bestimmt ist, wobei die Aufgusskammer (7) umfasst:
∘ ein Betätigungsglied der Aufgusskammer (7),
∘ zwei Kammerabschnitte (22, 42), die angeordnet sind, um durch das Betätigungsglied voneinander entfernt oder einander angenähert zu werden, um jeweils die Aufgusskammer (7) zu öffnen oder zu schließen,
* einen hydraulischen Kreislauf mit einer Pumpe (400) und einem Heizkessel (500), die beide vor der Aufgusskammer (7) vorgeschaltet sind, um das Aufgusssystem (10) mit unter Druck stehender Flüssigkeit zu versorgen,
* eine Verschlussvorrichtung (160) mit vorgeschalteten Verschlussmitteln (161) und die konfiguriert ist, um alternativ von einer ersten zu einer zweiten Position überzugehen, in denen die vorgeschalteten Verschlussmittel (161) jeweils den Eintritt der Dosis (1) in die Aufgusskammer (7) verhindern und zulassen,
* ein Antriebssystem (90), das konfiguriert ist, um die Verschlussvorrichtung (160) alternativ von der ersten zur zweiten Position übergehen zu lassen,
* das Antriebssystem (90) umfasst einen Elektromotor, der durch einen elektrischen Versorgungsschaltkreis mit Strom versorgt wird,
**dadurch gekennzeichnet, dass** sie umfasst:
* wenigstens einen Schalter AR, der angeordnet ist, um in der ersten Position durch ein mobiles Teil (211) angesprochen zu werden, das in Verschiebung der Verschlussvorrichtung (160) fest verbunden ist, wobei der Schalter AR in dem elektrischen Versorgungsschaltkreis des Motors derart angeordnet ist, dass die Öffnung des Schalters AR die elektrische Versorgung des Motors blockiert, wobei der Schalter AR offen ist, wenn er angesprochen wird,
* wenigstens ein Schalter AV, der angeordnet ist, um in der zweiten Position durch ein mobiles Teil (211) angesprochen zu werden, das in Verschiebung der Verschlussvorrichtung (160) fest verbunden ist, wobei der Schalter AV in dem elektrischen Versorgungsschaltkreis des Motors derart angeordnet ist, dass die Öffnung des Schalters AV die elektrische Versorgung des Motors blockiert, wobei der Schalter AV offen ist, wenn er angesprochen wird.

2. Maschine gemäß dem voranstehenden Anspruch mit einer durch einen Nutzer betätigbaren Taste BP, die eine erste und eine zweite Konfiguration zulässt, und der Taste BP zugeordneten Steuerschaltern und die auf den elektrischen Versorgungsschaltkreis des Antriebssystems (90) einwirken und in der:
* der Schalter AR in Serie an den Motor angeschlossen ist, wenn die Steuertaste BP sich in der ersten Konfiguration befindet, konfiguriert ist, um offen zu sein, wenn sie angesprochen wird, und konfiguriert ist, um geschlossen zu sein, wenn sie nicht angesprochen wird.
* der Schalter AV in Serie an den Motor angeschossen ist, wenn die Steuertaste sich in der zweiten Konfiguration befindet, konfiguriert ist, um offen zu sein, wenn sie angesprochen wird, und konfiguriert ist, um geschlossen zu sein, wenn sie nicht angesprochen ist.

3. Maschine gemäß einem der voranstehenden Ansprüche, bei der die Schalter AR und AV mit einem und demselben mobilen Teil zusammenwirken.

4. Maschine gemäß einem der voranstehenden Ansprüche, die derart angeordnet ist, dass die Verschlussvorrichtung (160) in der ersten Position den Eintritt einer Dosis (1) in die Kammer (7) verhindert und den Austritt aus der Kammer (7) einer in der Kammer (7) vorhandenen Dosis zulässt.

5. Maschine gemäß einem der voranstehenden Ansprüche, bei der die Aufgusskammer (7) durch einen ersten (22) und einen zweiten (42) Kammerabschnitt (7) definiert ist, die geeignet sind, gegenseitig angenähert oder entfernt zu werden und bei der die Verschlussvorrichtung (160) von dem ersten (22) und zweiten (42) Kammerabschnitt (7) unterschiedlich ist.

6. Maschine gemäß einem der voranstehenden Ansprüche, umfassend einen Schalter CP, der in Serie an einen Versorgungskreislauf der Pumpe (400) angeschlossen ist, der konfiguriert ist, um die Versorgung der Pumpe (400) zu erlauben, wenn er angesprochen wird und der konfiguriert ist, um die Versorgung der Pumpe (400) zu blockieren, wenn er nicht angesprochen wird und der konfiguriert ist, um von einem mobilen Teil (211) angesprochen zu werden, das in Verschiebung mit der Verschlussvorrichtung (160) fest verbunden ist, wenn die Verschlussvorrichtung (160) sich in der zweiten Position befindet.

7. Maschine gemäß dem voranstehenden Anspruch, bei der der hydraulische Kreislauf ein Entlastungs-Magnetventil (600) umfasst, das angeordnet ist, um den Druckabfall der Flüssigkeit zu erlauben, die in dem hydraulischen Kreislauf enthalten ist, wenn sie mit Strom versorgt wird.

8. Maschine gemäß dem voranstehenden Anspruch mit einem Schalter CV, der in Serie an einen Versorgungsschaltkreis des Magnetventils (600) mit Strom angeschlossen ist, der konfiguriert ist, um die Versorgung des Magnetventils (600) zu erlauben, wenn er angesprochen wird, der konfiguriert ist, um die Versorgung des Magnetventils (600) zu blockieren, wenn er nicht mehr angesprochen wird und der konfiguriert ist, um durch ein mobiles Teil (211) angesprochen zu werden, das in Verschiebung mit der Verschlussvorrichtung (160) fest verbunden ist, wenn die Verschlussvorrichtung (160) sich in der ersten Position befindet.

9. Maschine gemäß dem voranstehenden Anspruch, bei dem die Schalter AV und AR durch ein erstes mobiles Teil (211) angesprochen werden, das in Verschiebung der Verschlussvorrichtung (160) fest verbunden ist und bei der die Schalter CP und CV durch ein zweites mobiles Teil (211) angesprochen werden, das in Verschiebung der Verschlussvorrichtung (160) fest verbunden ist.

10. Maschine gemäß dem voranstehenden Anspruch, bei der das erste mobile Teil (211) in Translation durch eine erste Endlosschnecke (202) angetrieben wird und das zweite mobile Teil (211) in Translation durch eine zweite Endlosschnecke (202a) angetrieben wird, die von der ersten Endlosschnecke (202) unterschiedlich ist und bei der die erste Endlosschnecke (202) bevorzugt in Rotation des Motors fest verbunden ist.

11. Maschine gemäß Anspruch 3 bis 10, bei der die Schalter CP und CC derart positioniert sind, dass die Zeit zwischen der Blockierung der Versorgung der Pumpe (400) und der Versorgung des Magnetventils (600) wenigstens zum Teil einen Druckabfall des hydraulischen Kreislaufs durch einen Ausgang der Aufgusskammer (7) erlaubt und bei der die Zeit zwischen der Blockierung der Versorgung der Pumpe (400) und der Versorgung des Magnetventils (600) bevorzugt rund 0,1 Sekunden beträgt.

12. Maschine gemäß einem der voranstehenden Ansprüche, bei der das Aufgusssystem (10) konfiguriert ist, um abnehmbar auf dem Modell der Maschine mit dem Heizkessel (500) und der Pumpe (400) fest befestigt zu sein und einen Schalter CG umfasst, wobei der Schalter CG in Serie an einen Versorgungsschaltkreis der Pumpe (400) angeschlossen ist, der angeordnet ist, um mit dem Aufgusssystem (10) derart zusammenzuwirken, dass, wenn das Aufgusssystem (10) auf dem genannten Modul der Maschine fest befestigt ist, der Schalter CG dann geschlossen ist und die Versorgung der Pumpe (400) nicht blockiert und derart angeordnet ist, dass, wenn das Aufgusssystem (10) nicht auf dem genannten Modul der Maschine fest befestigt ist, der Schalter CG dann offen ist und das Versorgungssystem der Pumpe (400) blockiert.

13. Maschine gemäß Anspruch 3 bis 12 mit einer Abdeckung (21), die konfiguriert ist, um abnehmbar auf dem Aufgusssystem (10) fest befestigt zu sein, und einem Schalter CC, wobei der Schalter CC in Serie an einen Versorgungsschaltkreis der Pumpe (400) angeschlossen ist, wobei er angeordnet ist, um mit der Abdeckung (21) derart zusammenzuwirken, dass, wenn die Abdeckung (21) fest auf dem Aufgusssystem (10) befestigt ist, der Schalter CC dann geschlossen ist und die Versorgung der Pumpe (400) nicht blockiert und derart angeordnet ist, dass, wenn die Abdeckung (21) auf dem Aufgusssystem (10) nicht fest befestigt ist, der Schalter CG dann offen ist und die Versorgung der Pumpe (400) blockiert.

14. Maschine gemäß einem der voranstehenden Ansprüche, bei der die Verschlussvorrichtung (160) nachgeschaltete Verschlussmittel (162) umfasst, die derart angeordnet sind, dass der Austritt der Dosis (1) aus der Kammer (7) selektiv verhindert oder zugelassen wird, wobei die Verschlussvorrichtung (160) angeordnet ist, um alternativ:
∘ von einer ersten Position, in der
- die vorgeschalteten Verschlussmittel (161) den Eintritt der Dosis (1) in die Kammer (7) verhindern,
- die nachgeschalteten Verschlussmittel (162) den Austritt der Dosis (1) aus der Kammer (7) zulassen
∘ in eine zweite Position, in der
- die vorgeschalteten Verschlussmittel (161) den Eintritt der Dosis (1) in die Kammer (7) zulassen,
- die nachgeschalteten Verschlussmittel (162) die Aufnahme der in die Kammer (7) eingeführten Dosis (1) erlauben und den Austritt derselben aus der Kammer (7) verhindern,
überzugehen.

15. Verfahren zur Herstellung von Getränken per Aufguss eines aufzugießenden Produkts, das in einem inneren Volumen einer Dosis (1) eingeschlossen ist, die per Zusammenbau von Schichten gebildet ist, die durch ihre Umfänge an einer Umrandung verbunden sind, unter Verwendung einer Maschine gemäß einem der voranstehenden Ansprüche, umfassend die folgenden Stufen:
- Einführen einer Dosis (1) in die Maschine,
- Aufnehmen der Dosis (1) vor der Aufgusskammer (7) bei vorgeschalteten Verschlussmitteln (161),
- Betätigung der Steuertaste BP zum automatischen Auslösen der folgenden Stufen:
∘ Verschließen des Magnetventils (600),
∘ Verschieben der Verschlussvorrichtung (160), derart, dass die Dosis (1) in die Aufgusskammer (7) eindringen kann und sie in der Kammer (7) zurückgehalten werden kann,
∘ Auslösen der Versorgung der Pumpe (400),
∘ Wieder verschließen der Aufgusskammer (7),
∘ Aufgießen der Dosis (1),
- Betätigen der Steuertaste BP zum automatischen Auslösen der folgenden Stufen:
∘ Deaktivieren der Pumpe (400)
∘ Aktivieren des Entlastungs- Magnetventils (600),
∘ Öffnen der Aufgusskammer (7),
∘ Verschieben der Verschlussvorrichtung (160) derart, dass der Austritt der Dosis (1) aus der Aufgusskammer (7) zugelassen wird und der Eintritt einer anderen Dosis in die Aufgusskammer (7) verhindert wird.

## Claims

1. A machine for preparing a drink by brewing a product to be brewed enclosed in a pod (1) comprising:
• a brewing system (10) comprising a brewing chamber (7) intended for receiving the product to be brewed enclosed in the pod (1), the brewing chamber (7) comprising :
∘ An actioner of the brewing chamber (7)
∘ Two chamber portions (22, 42) disposed to be reciprocally further away or closer by the actioner in order to respectively open or close the brewing chamber (7),
• a hydraulic circuit comprising a pump (400) and a boiler (500) positioned upstream of the brewing chamber (7) in order to feed the brewing system (10) with pressurized fluid,
• a closing device (160) comprising upstream closing means (161) and so configured as to alternately switch from a first to a second position wherein the upstream closing means (161) respectively prevents and allows the placing of the pod (1) in the brewing chamber (7),
• a driving system (90) so configured as to alternately switch the closing device (160) from the first to the second position,
• the driving system (90) comprises an electric motor powered by electricity by an electric power supply circuit
**characterized in that** it comprises:
• at least one switch AR so arranged as to be actuated in the first position by a moving part (211) attached, when moving, with the closing device (160), with the switch AR being positioned in the electric power supply circuit of the motor so that the opening of the switch AR prevents the electric power supply to the motor, with the switch AR being opened when actuated,
• at least one switch AV so arranged as to be actuated in the second position by a moving part (211) attached, when moving, with the closing device (160), the switch AV being positioned in the electric power supply circuit of the motor so that the opening of the switch AV prevents the power supply to the motor, with the switch AV being opened when actuated.

2. A machine according to the preceding claim comprising a button BP which can be actuated by a user, allowing a first and a second configuration and control switches associated with the button BP and acting on the electric power supply circuit of the driving system (90), wherein:
• the switch AR is connected in series with the motor when the control button BP is in the first configuration, is so configured as to be opened when it is actuated and is so configured as to be closed when it is not actuated,
• the switch AV is connected in series with the motor when the control button BP is in the second configuration, is so configured as to be opened when it is actuated and is so configured as to be closed when it is not actuated.

3. A machine according to any one of the preceding claims, wherein the switches AR and AV cooperate with the same moving part.

4. A machine according to any one of the preceding claims, so arranged that, in the first position, the closing device (160) prevents the placing of a pod (1) in the chamber (7) and allows the release, out of the chamber (7) of a pod present in the chamber (7).

5. A machine according to any one of the preceding claims, wherein the brewing chamber (7) is defined by a first (22) and a second (42) portions of a chamber (7) able to be mutually placed close to, or remote from one another and wherein the closing device (160) is distinct from the first (22) and second (42) portions of the chamber (7).

6. A machine according to any one of the preceding claims comprising a switch CP connected in series to a power supply circuit of the pump (400), so configured as to allow the supply of the pump (400) when it is actuated and so configured as to prevent the supply of the pump (400) when it is not actuated and so configured as to be actuated by a moving part (211) attached, when moving, with the closing device (160) when the closing device (160) is in the second position.

7. A machine according to the preceding claims, wherein the hydraulic circuit comprises a discharge solenoid valve (600) so arranged as to allow the depressurization of the fluid contained in the hydraulic circuit when it is power supplied by electricity.

8. A machine according to the preceding claim, comprising a switch CV connected in series with an electric power supply circuit of the solenoid valve (600), so configured as to allow the supply of the solenoid valve (600) when it is actuated, and so configured as to prevent the supply of the solenoid valve (600) when it is not actuated and so configured as to be actuated by a moving part (211) attached, when moving, with the closing device (160), when the closing device (160) is in the first position.

9. A machine according to the preceding claim, wherein the switches AR and AV are actuated by a first moving part (211) attached, when moving, with the closing device (160) and wherein the switches CP and CV are actuated by a second moving part (211) attached, when moving, with the closing device (160).

10. A machine according to the preceding claim, wherein the first moving part (211) is driven in translation by a first endless screw (202) and the second moving part (211) is driven in translation by a second endless screw (202a) different from the first endless screw (202) and wherein the first endless screw (202) is preferably attached with the motor, when moving in rotation.

11. A machine according to any one of claims 3 to 10, wherein the switches CP and CC are so positioned that the time from the preventing of the supply to the pump (400) and the supply to the solenoid valve (600) at least partially allows a depressurization of the hydraulic circuit through an outlet of the brewing chamber (7) and wherein, preferably, the time from the preventing of the supply to the pump (400) and the supply to the solenoid valve (600) amounts to approximately 0.1 seconds.

12. A machine according to any one of the preceding claims, wherein the brewing system (10) is so configured as to be removably made attached with a machine module comprising the boiler (500) and the pump (400) and comprises a switch CG, with the switch CG being connected in series to a power supply circuit of the pump (400), being so arranged as to cooperate with the brewing system (10) so that, when the brewing system (10) is made attached with the said machine module, the switch CG is then closed and does not prevent the supply to the pump (400), and being so arranged that, when the brewing system (10) is not made attached with the said machine module, the switch CG is then opened and prevents the supply to the pump (400).

13. A machine according to any one of claims 3 to 12 comprising a cover (21) so configured as to be removably made attached with the brewing system (10) and a switch CC, with the switch CC being connected in series with a power supply circuit of the pump (400), being so arranged as to cooperate with the cover (21) so that, when the cover (21) is made attached with the brewing system (10), the switch CC is then closed and does not prevent the supply to the pump (400), and being so arranged that, when the cover (21) is not made attached with the brewing system (10), the switch CG is then opened and prevents the supply to the pump (400).

14. A machine according to any one of the preceding claims, wherein the closing device (160) comprises downstream closing means (162) so arranged as to selectively prevent or allow the release of the pod (1) out of the chamber (7), with the closing device (160) being so arranged as to alternately switch:
∘ from a first position wherein:
- the upstream closing means (161) prevents the entry of a pod (1) in the brewing chamber (7),
- the downstream closing means (162) allows the release of a pod (1) out of the brewing chamber (7),
∘ to a second position wherein:
- the upstream closing means (161) allows the entry of a pod (1) in the brewing chamber (7),
- the downstream closing means (162) allows the receiving of the pod (1) placed in the brewing chamber (7), and prevents the release of the pod out of the chamber (7).

15. A method for preparing a drink by brewing a product to be brewed enclosed in an internal volume of a pod (1) composed by the assembly of layers joined by their peripheries around a perimeter, using a machine according to any one of the preceding claims, comprising the following steps:
- place a pod (1) in the machine,
- receive the pod (1) upstream of the brewing chamber (7), at the upstream closing means (161),
- actuate the control button BP so as to automatically trigger the following steps:
∘ shut the solenoid valve (600),
∘ move the closing device (160) so as to allow the placing of the pod (1) in the brewing chamber (7) and to hold same in the brewing chamber (7),
∘ trigger the supply to the pump (400),
∘ close the brewing chamber (7),
∘ brew the pod (1),
- actuate the control button BP so as to automatically trigger the following steps:
∘ deactivate the pump (400),
∘ actuate the discharge solenoid valve (600),
∘ open the brewing chamber (7),
∘ move the closing device (160) so as to release the pod (1) out of the brewing chamber (7) and to prevent the placing of another pod (1) in the brewing chamber (7).
